# EUROPÄISCHE PATENTSCHRIFT

(11) **EP 3 484 271 B1**
(45) Veröffentlichungstag und Bekanntmachung des Hinweises auf die Patenterteilung: **01.09.2021**
(21) Anmeldenummer: 17748657.8
(22) Anmeldetag: 14.07.2017
(51) Int. Cl.: A01G 9/14

(54) **VERFAHREN UND ANLAGE ZU DESSEN DURCHFÜHRUNG, ZUM INDUSTRIELLEN ANBAUEN, ZIEHEN, ERNTEN, WASCHEN, VERPACKEN, ETIKETTIEREN UND KÜHLLAGERN VON PFLANZEN, INSBESONDERE VON SALATEN, GEMÜSEN ODER FELDFRÜCHTEN**
PROCESS AND INSTALLATION FOR IMPLEMENTATION, INDUSTRIAL CULTURE, GROWING, HARVESTING, WASHING, PACKING, LABELING AND COOLING OF PLANTS, ESPECIALLY OF SALATS, VEGETABLES OR FIELD PRODUCTS
PROCÉDÉ ET INSTALLATION POUR LA MISE EN OEUVRE INDUSTRIELLE D'UNE CULTURE, CROISSANCE, RÉCOLTE, LAVAGE, EMBALLAGE, ÉTIQUETAGE ET RÉFRICHERATION DE PLANTES, EN PARTICULIER DE SALATES, DE LÉGUMES OU DE PRODUITS AGRICOLES

(30) Priorität: 15.07.2016 CH 9092016
(43) Veröffentlichungstag der Anmeldung: 22.05.2019
(73) Patentinhaber: Schneiter, Bernhard, 6289 Müswangen (CH)
(72) Erfinder: Schneiter, Bernhard, 6289 Müswangen (CH)
(74) Vertreter: Felber, Josef
(86) Internationale Anmeldenummer: PCT/EP2017/067815
(87) Internationale Veröffentlichungsnummer: WO 2018/011387

(56) Entgegenhaltungen:
- EP-A1- 1 123 649
- EP-A1- 1 599 086
- EP-A1- 2 823 705
- EP-A2- 0 142 643
- WO-A1-99/55139
- WO-A1-2013/066254
- WO-A2-2014/066844
- US-A- 4 028 847

## Beschreibung

Diese Erfindung betrifft ein Verfahren, um auf industrieller Basis Pflanzen, insbesondere Salate, Gemüse oder Feldfrüchte aller Art zu ziehen, sowie auch eine Anlage zum Durchführen dieses Verfahrens. Herkömmlich werden Pflanzen wie Salate, Gemüse oder andere Feldfrüchte meist in grossen Parzellen auf natürlichem Grund und Boden angebaut bzw. gesetzt und gezogen, bewässert und schliesslich geerntet. Vielerorts werden diese Arbeiten händisch durchgeführt. Viele Menschen müssen hierzu in Kauerstellung und gebückt ihre Arbeitsleistung erbringen und sind dabei Sonne, Regen, Wind und Wetter ausgesetzt. Obwohl gewisse Arbeitsschritte durch Maschinen übernommen werden können, etwa das Setzen, das Bewässern, zuweilen auch das Ernten, wird immer noch viel Personal benötigt, und die ganze Pflanzenkultivation ist stark abhängig vom Wetter, den Tages- und Nachtzeiten und von den Jahreszeiten. Mit konventionellen Methoden des Ziehens von Feldfrüchten, bis diese letztlich gewaschen und verpackt für die Abnehmer in Transportkisten geladen bereit stehen, sind viele manuelle Arbeitsschritte nötig. Bei dieser konventionellen Produktion zum Beispiel von Salaten gehen beim Waschen allein bis ca. 1/4 dieser Salate verloren. Ausserdem erfolgt das Ziehen der Pflanzen auf dem effektiven Boden, auf einer einzigen Fläche, und der Flächenbedarf wächst linear mit der gewünschten Anzahl Feldfrüchte.

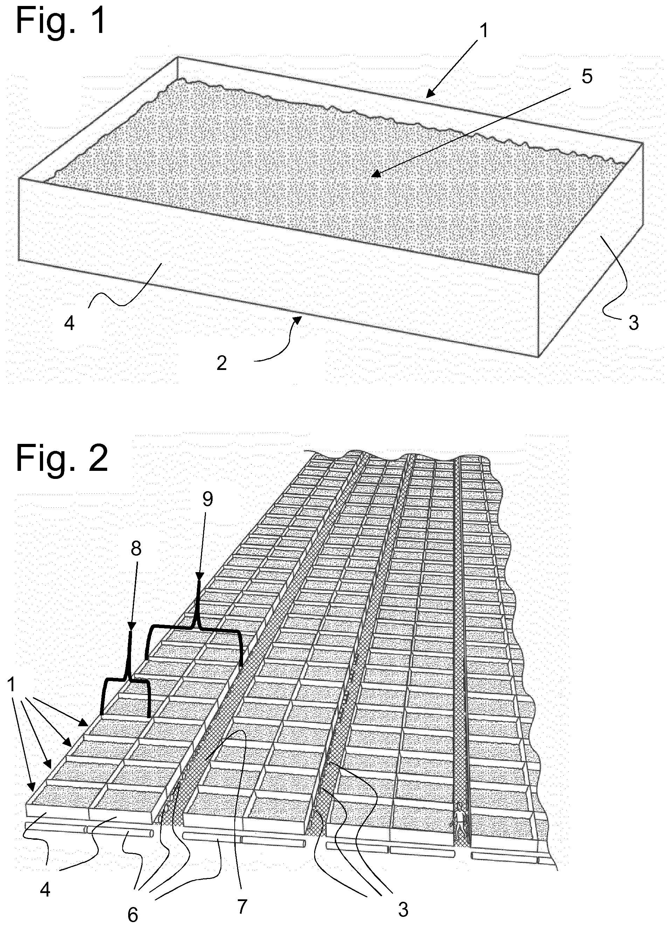

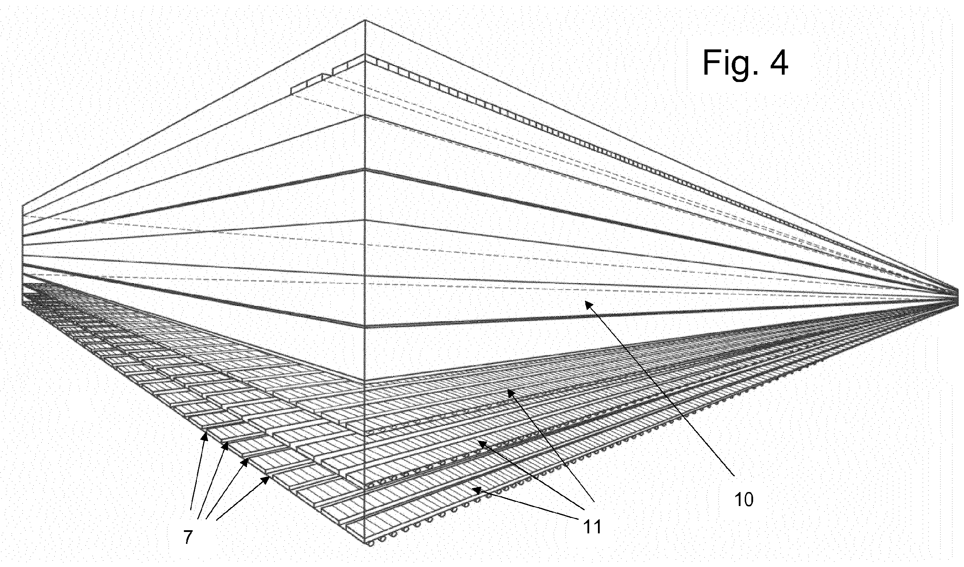

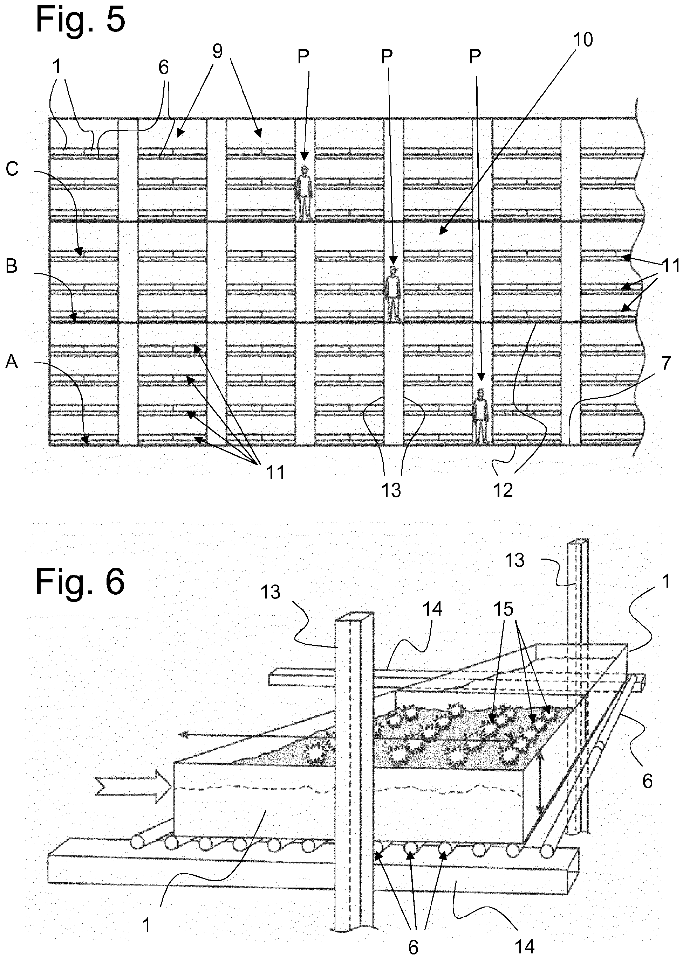

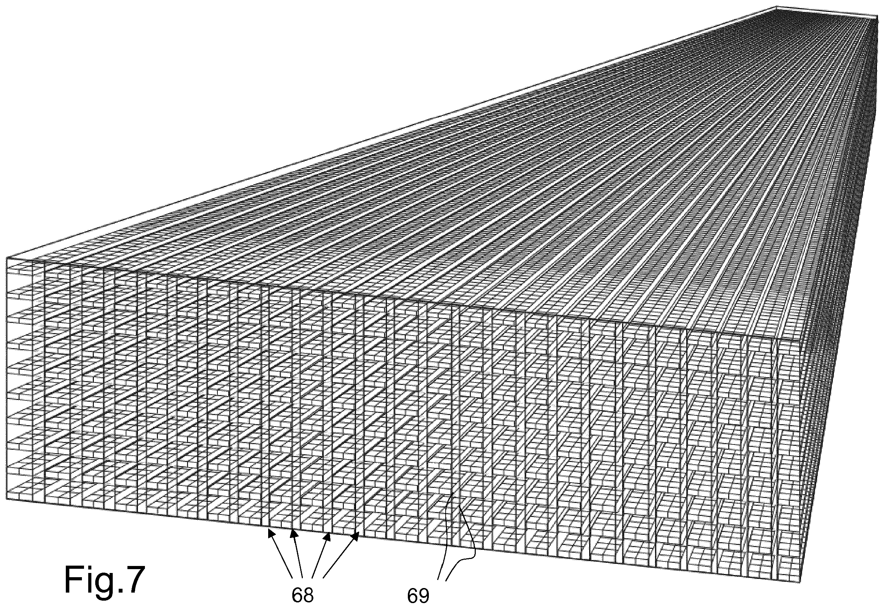

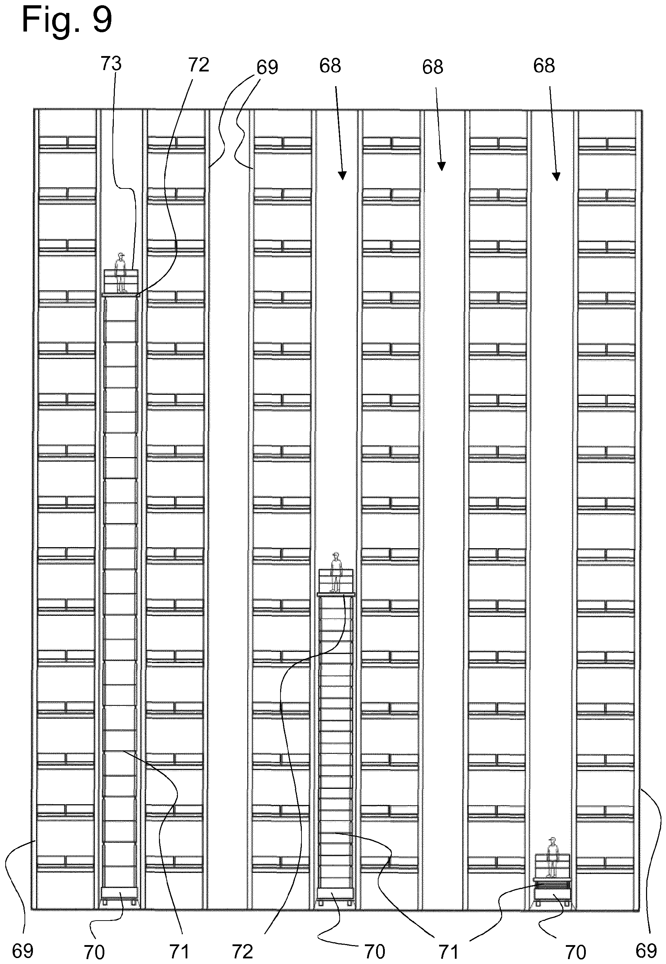

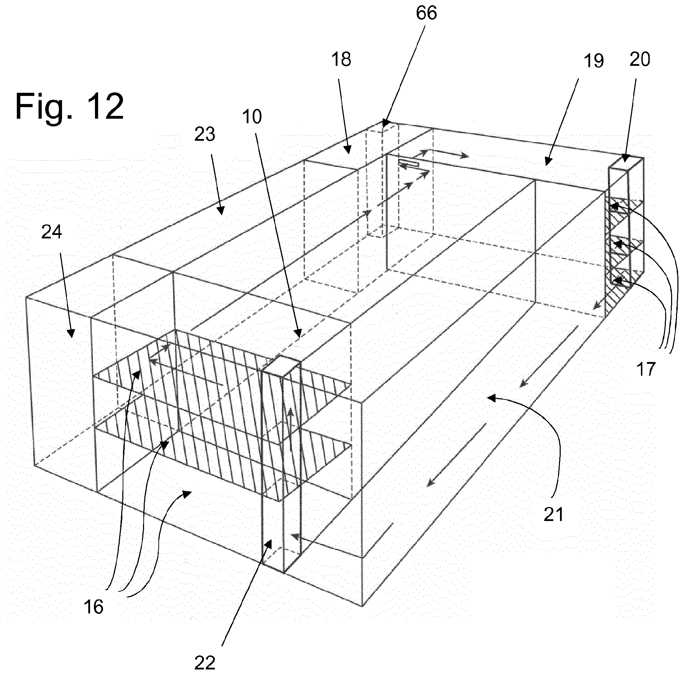

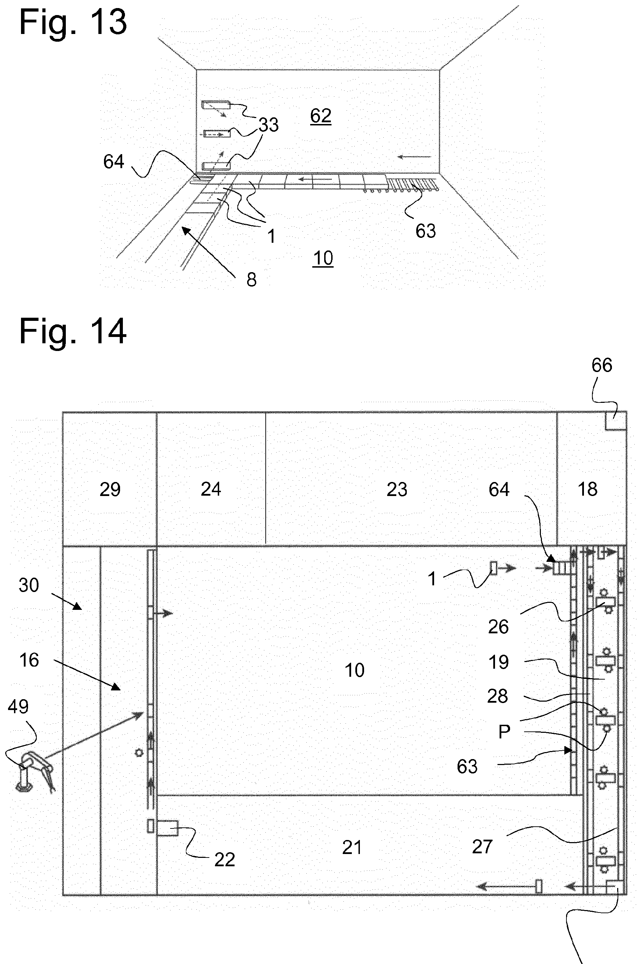

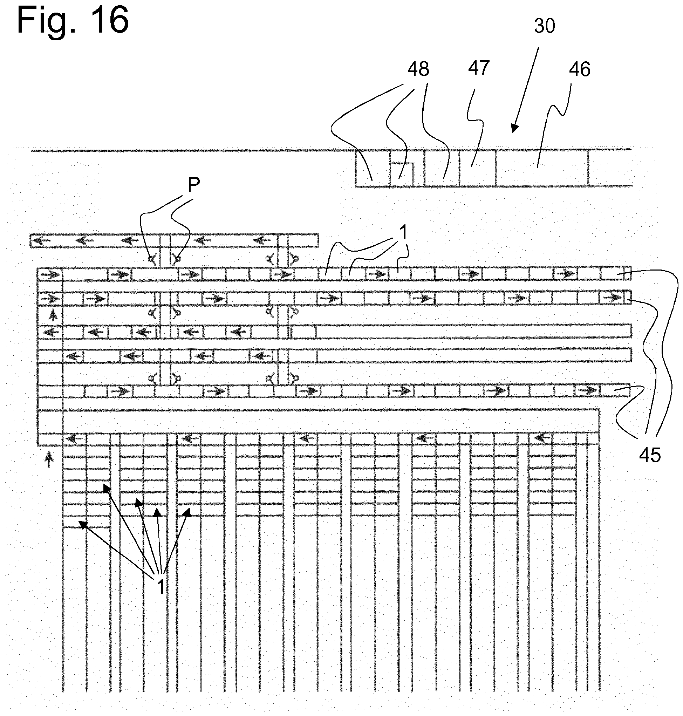

Aus WO 99 55139 ist ein überdachtes Gewächshaus bekannt geworden. Die Pflanzen werden zunächst als Sämlinge in Behälter gepflanzt und später als Setzlinge in andere Behälter umgepflanzt (growing carriages 12 - siehe Figur 4, 5 und 6), die dann auf Schienen (guide rails 29 - Figur 5) zweimal über eine Länge des Gewächshauses (Figuren 12 und 13) mittels eines Antriebs mit hydraulischen Zylinder-Kolbeneinheiten (siehe Figur 7) verschoben werden - über eine Kultivationsperiode von z.B. 2 Monaten (Seite 9, Zeile 24). Es sollen insbesondere Blumen sowie, Broccoli, Lauch, Blumenkohl und Lattich kultiviert werden (Seite 1, Zeile 4). Die Einrichtung weist mehrere Etagen bzw. Ebenen auf (tiers) - (Seite 2, Zeile 16 und Figuren 1 und 9). Das Gewächshaus wird via das künstlich erzeugte Licht geheizt (Seite 3, Zeile 5-7). Die Energieversorgung soll durch Verbrennen von Holzschnitzeln oder anderen Biogasen, Gas oder Öl gewährleistet werden - transformiert zu Strom und dann zu Licht (Seite 3, Zeilen 19-23). In der untersten Etage werden die Sämlinge gesetzt und gezüchtet, die dann als Setzlinge in den oberen Etagen weiterkultiviert werden (Seite 4, Zeile 20). Wenn die Pflanzen eine gewisse Grösse erreicht haben, werden sie erneut umgepflanzt, mit weniger dichter Belegung der Behälter (Seite 4, Zeile 32). Im Gewächshaus wird die Luft mittels Ventilatoren zwangszirkuliert (siehe Seite 5, Zeile 10 und Figuren 9 und 16). Es wird gezielt CO₂ dazu gepumpt, für ein Beschleunigen des Pflanzenwachstums (Seite 5, Zeile 13). Das CO₂ wird aus der Verbrennung für die Energieerzeugung abgezweigt (Seite 5, Zeile 20). Es gibt Lifte, um die Behälter in verschiedene Etagen zu verschieben (Seite 6, Zeile 18). Die Behälter sind auf einem Paar Schienen (guide rails 29) geführt (Seite 6, Zeile 24-27 und Figuren 5 und 5). Die Etagen haben keinen festen durchgehenden Boden, sodass Luft zirkulieren kann (Seite 7, letzte Zeile). In einer speziellen Abteilung werden die Pflanzen geerntet, gewaschen, verpackt, gekühlt und kühl gelagert (Seite 9, erste drei Zeilen). Das Gewächshaus soll etwa 200 m lang sein. Über eine Kultivationsperiode bewegen sich die Behälter hin und her, also 2 × 200 m - über 400 m Strecke - in 24 Stunden ca. 7 Meter weit (Seite 1, erster Abschnitt). Die Behälter werden nach dem Ernten der Pflanzen geleert, gewaschen und desinfiziert (Seite 15, Zeile 5-6) und dann wieder mit Substrat befüllt. (Seite 8, Zeile 33). Es ist nirgends von Humus die Rede, sondern stets von Substrat. Nachteilig an diesem Gewächshaus sind die Tatsachen zu sehen, dass die Pflanzen vom Setzen bis zum Ernten mehrmals umgepflanzt werden müssen, weiter dass sie nicht in natürlichem Humus gezogen werden. Die Behälter für die Pflanzen legen auf Schienen zweimal 200 m zurück, einmal auf einem Hinweg und einmal auf einem Rückweg, und sie werden auch auf verschiedenen Etage verschoben. Der Antrieb der Behälter erfolgt mit hydraulischen Zylinder-Kolbeneinheiten. Somit ist der Antrieb aufwändig und die Behälter müssen gewendet werden, was ebenfalls aufwändig ist. Die Behälterbahnen liegen dicht nebeneinander (Fig. 2) und daher sind die Pflanzen nicht immer und überall für das Personal zugänglich.

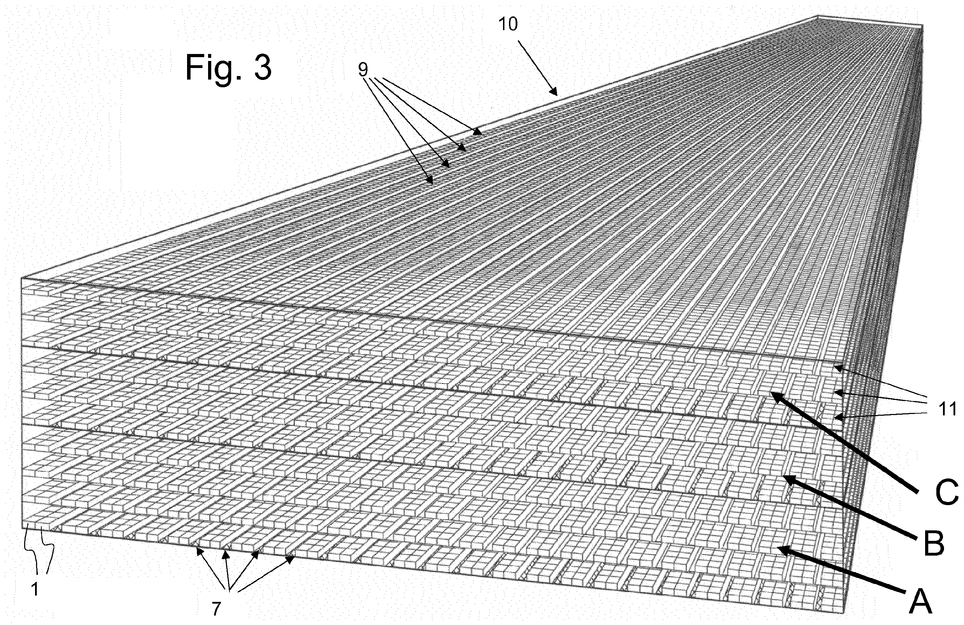

Die WO 2004/071174 A1 zeigt ein Gewächshaus mit beweglichen Kultivationstischen auf Stahlrädern (Figur 4). Diese sind mit einem Bewässerungssystem ausgerüstet (Seite 14, Zeile 23, Figuren 3 und 4). Der Antrieb erfolgt über zwei gegenläufig laufende horizontale, elektrisch angetriebene, liegende Gummiräder, die zwischen sich eine Antriebsschiene 17 einklemmen (Figur 4, Seite 15, Zeile 30-34), und zwischen den Kultivationstischen ist jeweils eine Arbeitspassage freigehalten, von welcher aus die Gewächse erreichbar sind. Dazu dient eine Plattform, die auf und ab bewegbar ist (Figur 5, sowie Seite 10, Zeile 34-35). Das Luftzirkulations-Management sorgt für die richtige Temperatur, die richtige Feuchtigkeit, gerade auch um einen Pilzbefall der Pflanzen zu vermeiden (Seite 5, Zeile 4). Das Gewächshaus verfügt über Doppelwände aus Kunststoff, mit einem Luftspalt zwischen diesen beiden Wänden (Seite 6, Zeile 5-7). Die Kultivationstische können programmgesteuert bewegt werden (Seite 10, Zeile 23-33). Die Steuerung kann auch via Internet oder gar SMS erfolgen (Seite 11, Zeile 23-24 sowie Seite 22, Zeile 23-25). Auch draussen sind Sensoren angeordnet, um Temperatur, Windgeschwindigkeit, Windrichtung, Lichtintensität etc. zu messen (Seite 23, Zeilen 1-3), und um das Luftzirkualtions-, Temperatur-, Feuchtigkeitsregime zu regeln. Die Luftzufuhreinrichtung ist unterhalb der Kultivationstische angeordnet, um die Luftströme durch einen Bereich zu steuern, für die Kultivation der Pflanzen auf den Kultivationstischen, und mit einer Gebläseinstallation, um die gerichteten Luftströme zu produzieren (Seite 26, Anspruch 1). Nachteilig an diesem Gewächshaus sind die Tatsachen zu sehen, dass die Pflanzen in je einem Topf 7 gezogen werden und die einzelnen Töpfe nicht überall und jederzeit zugänglich sind. Es ist ein elektrischer Antrieb mit Gummirädern nötig (Seite 15, Zeile 30), um die Gewächstische auf horizontal verlegten Schienen zu bewegen. Das Gewächshaus eignet sich in diesem Konzept nicht zur Kultivierung von zum Beispiel Salaten in humusgefüllten grossen Pflanzenbehältern, die mehrere Salate fassen. Jeder Topf muss hier einzeln behandelt werden, was viel Aufwand bedeutet.

EP 2 823 705 A1 zeigt eine Methode und eine modulare Struktur, um aeroponische Pflanzen zu kultivieren. Die **Aeroponik** ist eine Anbaumethode für Pflanzen, bei welcher die Pflanzen so fixiert werden, dass ihre Wurzeln ständig durch ein mit Hilfe von Zerstäubern (Niederdruck-, Hochdruck- und Ultraschallzerstäubern) hergestellten Düngerlösung aus Wasser und Nährstoffen benetzt werden. Sie ist auch gut geeignet für Wurzelgemüse wie Kartoffeln und Karotten. Das Verfahren wurde 1982 von K. T. Hubick entwickelt und später von NASA-Wissenschaftlern verbessert. Die Methode eignet sich auch zum Pflanzenanbau unter Bedingungen, bei denen der Einfluss der Schwerkraft eine geringere Rolle spielt als auf der Erde. Aeroponik wird wegen des enormen Wurzelwachstums heutzutage hauptsächlich bei der Stecklingsbewurzelung verwendet, denn bei dieser Methode wachsen die Wurzeln stärker und schneller als die oberirdischen Teile. Die Pflanzengefässe folgen einer leicht abfallenden Bahn, je eine auf z.B. fünf Stockwerken, sodass die Erdanziehung für das Verschieben ausgenützt wird (Figur 2). Die Pflanzen hängen (Figur 1) von den Wurzelgefässen herunter. Die modulare Struktur besteht aus einem Stahlgerüst mit vertikalen und horizontalen Stahlträgern, sodass ein Boden (1) gebildet wird und mehrere Stockwerke (1.1) mit horizontalen, jedoch leicht geneigten Strukturelementen (2) zur Ausnützung der Schwerkraft auf einem Schienensystem (4) (Patentanspruch 13). Dazwischen gibt es Inspektionsplattformen (5) und ein Bewässerungssystem (6). Am Schluss wird geerntet, gewaschen, verpackt und spediert (Patentanspruch 11) sowie Figur 4. Es ist jedoch nicht einerlei, ob man kleine Töpfe oder Behälter mit daraus hängenden Pflanzen kultiviert oder eben Pflanzen möglichst naturnahe in grossen Pflanzenbehältern und in sehr grosser Menge kultivieren möchte, die mit Humus gefüllt sind. Die Massen, die hierzu umgeschlagen und verschoben werden müssen, sind unvergleichlich grösser. Entsprechend braucht es ganz andere konstruktive Merkmale. Die WO 2013/066254 zeigt ein Konzept mit Pflanzengefässen, die sich sprialförmig in einem kegelstumpf-förmigen Gebäude nach abwärts bewegen, während die Pflanzen wachsen. Als Wachstumsmedium wird Bimsstein empfohlen - nicht Humus (Seite 5, erster Abschnitt). EP 2 823 705 A1 zeigt ein weiteres Beispiel für eine Gewächshaus und ein anderes Verfahren zum Anbau von Pflanzen.

Angesichts dieses Standes der Technik ist es die Aufgabe der vorliegenden Erfindung, ein Verfahren und eine Anlage zum Ziehen von Pflanzen, insbesondere Salate, Gemüse oder Feldfrüchte, in sehr grossem industriellen Stil, wobei aber die Pflanzen in natürlichem Humus und unter möglichst naturnahen Bedingungen gezogen werden sollen, einzig unter Beigabe einzig von Wasser, Licht und Wärme, also auf komplett natürlicher Basis, und wobei die Produktion logistisch optimiert ist, sowie das Verfahren nach ökologischen und ökonomischen Gesichtspunkten hocheffizient sein soll, also auf geringstem Platz ein Maximum an Produktionskapazität ermöglichen soll, und die Arbeitsschritte weitestgehend von Automaten durchgeführt werden können, namentlich die Aufbereitung des Humus, das Setzen der Setzlinge, die Bewässerung, das Ernten, Waschen, Verpacken und Bereitstellen der Produkte zum Transport. Dazu sollen die Pflanzenbehälter permanent mit Licht mit einem Frequenzspektrum ähnlich jenem der natürlichen Sonne bestrahlt werden, und die Pflanzen sollen mit Feuchtigkeit nach Bedarf versorgt werden können und für das Pflanzenwachstum soll eine vorgegebene Temperatur eingehalten werden können. Das Verfahren soll dabei von Wetter, Tageszeit und Jahreszeit unabhängig durchführbar sein. Die dazu nötigen grossen Massen an wiederverwendbarem und jeweils erneut gedüngtem Humus erfordern eine intelligente Anordnung und Beförderung von schweren humusgefüllten Pflanzenbehältern. Auch das Licht zur Simulierung von Tag und Nacht und die Befeuchtung sollen automatisiert den Pflanzen zur Verfügung gestellt werden. Die vor- und nachgelagerten Arbeiten sollen vom Aufbereiten des Humus bis hin zum fertigen Verpacken der kultivierten Pflanzen, zum Beispiel von Salaten, sollen weitgehend maschinell und in jeweils gesonderten Räumen erfolgen. Die einzelnen Pflanzenbehälter sollen während der ganzen Kultivation an jeder Stelle zugänglich sein. Die zugehörige Anlage, welche dieses Verfahren umsetzen kann, soll kostengünstig, platzsparend, energieoptimiert und rasch erstellbar und ökonomisch betreibbar sein, mit einem minimalen Aufwand an Personal.

Diese Aufgabe wird gelöst einerseits von einem Verfahren zum industriellen Anbauen und Ziehen von Pflanzen, insbesondere von Salaten, Gemüsen oder Feldfrüchten nach dem Patentanspruch 1 sowie im Besonderen nach dem von diesem Patentanspruch 1 abhängigen Patentanspruch 2. Die Anlage zur Durchführung des Verfahrens zeichnet sich durch die Merkmale des Patentanspruches 3 aus, sowie im Besonderen durch die vom Patentanspruch 3 abhängigen Patentansprüche.

Die Anlage und das Verfahren sind in den Zeichnungen als Ausführungsbeispiel illustriert. Anhand dieser Zeichnungen werden zunächst die Anlage und alle ihre Komponenten nachfolgend beschrieben und erklärt. Anschliessend folgt eine Beschreibung des mit der Anlage durchgeführten Verfahrens und seiner Besonderheiten und Vorteile.

Es zeigt:
- Figur 1:: Einen transportablen Pflanzenbehälter als Kultivationseinheit;
- Figur 2:: Die Anordnung von nebeneinander liegenden Reihen von Pflanzenbehältern auf einer Ebene, gelagert und verschiebbar auf zylindrischen Rollen, mit begehbaren Stegen dazwischen;
- Figur 3:: Die Struktur einer Kultivationshalle als Kernraum einer Anlage zum industriellen Ziehen von Salaten, Gemüsen und Feldfrüchten, mit auf jeder der 10 Ebenen einer Vielzahl von Reihen von Pflanzenbehältern wie in Figur 2 gezeigt;
- Figur 4:: Die Kultivationshalle in einer Ansicht auf eine Ecke gesehen, mit Darstellung der Breitseite und der Längsseite;
- Figur 5:: Einen Aufriss der Kultivationshalle von vorne mit einem Ausschnitt von drei begehbaren Etagen A, B, C mit auf jeder Etage übereinander angeordneten Ebenen von Pflanzenbehältern, die in Reihen angeordnet sind, wie in Figur 4 gezeigt;
- Figur 6:: Eine perspektivische Seitenansicht von zwei parallel nebeneinander liegenden Pflanzenbehältern auf ihren zylindrischen Rollen, mit den tragenden Stahlträgern für die Rollen und für die Struktur der ganzen Kultivationshalle;
- Figur 7:: Eine Struktur einer Kultivationshalle als Kernraum einer Anlage zum industriellen Ziehen von Salaten, Gemüsen und Feldfrüchten, mit auf jeder der 10 Ebenen einer Vielzahl von Reihen von Pflanzenbehältern, und zwischen den Reihen von übereinander angeordneten Pflanzenbehältern über die Länge durchgehenden, freien schluchtartigen Freiräumen;
- Figur 8:: Eine Struktur wie in Figur 7 gezeigt in einer anderen Perspektive gezeigt, mit Sicht unter zwei der obersten Reihen von Pflanzenbehältern, mit vertikalen Stahlstützen für die einzelnen Reihen;
- Figur 9:: Einen Ausschnitt der Struktur nach den Figuren 7 und 8 in einer Ansicht auf die Front der Kultivationshalle, mit in den schluchtartigen Freiräumen je auf und ab fahrbaren Hebebühnen auf Schienenwagen, die in die Kultivationshalle hinein verfahrbar sind;
- Figur 10:: Einen Ausschnitt der Struktur nach den Figuren 7, 8 und 9 in einer Ansicht auf die Seite gesehen, mit einer auf und ab fahrbaren Hebebühne auf einem hin und her verschiebbaren Schienenwagen, mit je einer Scherenkonstruktion zum Höhenverstellen der Hebebühne auf dem Schienenwagen;
- Figur 11:: Einen Ausschnitt einer Struktur ähnlich wie nach den Figuren 7, 8 und 9 in einer Ansicht auf die Seite gesehen, jedoch mit den Pflanzenbehältern jeder Reihe auf einer leicht abfallenden Rollenbahn gelagert;
- Figur 12:: Eine perspektivische Ansicht der gesamten Anlage mit Blick ins Innere zum Aufzeigen einer möglichen Anordnung der verschiedenen Räume um die zentrale Kultivationshalle herum;
- Figur 13:: Einen Blick auf die Rückwand der Kultivationshalle auf einer einzelnen Etage, mit den drei schlitzförmigen Öffnungen für die drei Ebenen A, B, C zum Hinausschieben der Pflanzenbehälter für die Weiterbeförderung zu den Erntestationen;
- Figur 14:: Einen Grundriss einer Etage der gesamten Anlage zum Aufzeigen der Logistik für die einzelnen Pflanzenbehälter;
- Figur 15:: Eine vergrösserte Darstellung des Bereichs in der Ansicht nach Figur 9, wo die Pflanzenbehälter am Ende der Kultivationsstrecke durch die Rückwand der Kultivationshalle hindurch gelangen, dann auf eine Seite und hernach zu den Erntestationen weiterbefördert werden;
- Figur 16:: Eine Gesamtansicht des Grundrisses der Ernteetage mit der Logistik und dem Handling für das Empfangen, Verschieben, Vereinzeln, Abernten und Weiterbefördern der Pflanzenbehälter am Ende der Kultivationsstrecke;
- Figur 17:: Einen Aufriss der Ernteetage mit der Logistik für den Empfang und das Abernten der auf drei Niveaus bzw. Ebenen pro Ernteetage ankommenden erntereifen Pflanzenbehälter und das Befüllen und der Abtransport der Erntekisten;
- Figur 18:: Eine Anlage zum Aufbereiten von Humus in schematischer Darstellung;
- Figur 19:: Eine Waschanlage zum Waschen von Kartoffeln, Karotten und ähnlichen Gemüsen in einer schematischen Darstellung;
- Figur 20:: Eine Waschanlage zum Waschen von Salaten und ähnlichen Feldfrüchten in gitterartigen Erntekisten, indem diese durch ein Frischwasserbad befördert werden;
- Figur 21:: Einen weiteren Typ einer Waschanlage zum Waschen von Salaten und ähnlichen Feldfrüchten, durch welche die gitterartigen Erntekisten befördert und geduscht werden.

Der Kern der Anlage sind mobile Pflanzenbehälter, so wie einer als Beispiel in Figur 1 dargestellt ist. Ein solcher Pflanzenbehälter 1 bildet einen Kasten mit Boden 2 und Seitenwänden 3, 4. Er misst zum Beispiel 2 Meter in der Länge, 1 Meter in der Breite und 40 cm in der Höhe. Der Kasten kann ein Kunststoff- oder Blechbehälter sein. Als Kunststoff eignet sich etwa ein Polyester. Er wird mit Humus 5 gefüllt, auf ein Niveau von ca. 30 cm, sodass die Oberfläche der Humusfüllung gegenüber dem Kastenrand um ca. 10 cm abgesenkt ist, wie das in der Figur 1 gezeigt ist. Das spezifische Gewicht von Pflanzenerde beträgt ca. 400-500 kg/m³. Somit wiegt eine Humusfüllung (2 m × 1 m × 0.3 m × 500 kg/m³) ca. 300 kg und wenn der Behälter noch 100 kg wiegt, kommen ungefähr 400 kg zusammen. Entsprechend muss der Kasten 1 von solcher Stärke sein, dass er diese Füllung ohne Weiteres tragen kann und mit seinem Boden 2 auf einer Mehrzahl von zylindrischen Rollen verschiebbar sein kann, wie das im Weiteren noch gezeigt wird. Die Dimensionen dieses Pflanzenbehälters 1 können von den oben erwähnten abweichen. Doch mit den hier angegebenen Dimensionen eignet er sich für den Betrieb in einer Kultivationsanlage im Innern einer grossen Gesamtanlage, welche ein komplettes Gebäude bildet, wie das noch weiter beschrieben wird. Wenn die Dimensionen des Pflanzenbehälters 1 kleiner oder grösser gewählt werden, so wird das die Dimensionierung des Kultivationsraums und auch des ganzen Gebäudes, in welchem die Anlage untergebracht ist, entsprechend beeinflussen.

Die Figur 2 zeigt als Beispiel, wie diese Pflanzenbehälter 1 in einer Kultivationshalle angeordnet werden. Hier sind sie in einer Reihe angeordnet, wobei immer die Längsseiten 4 die Front einer Einzelreihe 8 bilden. Zwei Einzelreihen 8 bilden zusammen eine Bahn 9 von Pflanzenbehältern 1 aus einer Doppelreihe. Die Breitseiten 3 der einzelnen Pflanzenbehälter 1 befinden sich damit auf der Seite jeder Einzelreihe 8 und somit an den beiden Aussenseiten der Bahn 9. Einzelne solche Bahnen 9 aus Doppelreihen sind nebeneinander liegend angeordnet, wobei zwischen diesen Bahnen 9 je ein Abstand von ca. 0.80 m eingehalten ist. Eine mögliche Dimensionierung einer Anlage schliesst 25 solcher Bahnen ein, mit je 0.80 m Zwischenraum zwischen den einzelnen Bahnen 9, sodass sich eine Gesamtbreite von ca. 121 m ergibt. In diesen Zwischenräumen zwischen den Bahnen 9 ist ein Gitterrost als Laufsteg 7 angeordnet, welcher ca. 80 cm in der Breite misst, sodass er bequem begehbar ist. Damit kann die Kultivationshalle über alle diese Laufstege 7 begangen werden, und die Laufstege 7 bieten einen Zugriff auf jeden einzelnen Pflanzenbehälter 1, wenn sich das im Verlauf einer Kultivationsperiode als nötig erweisen sollte. Jede Reihe 8 jeder Bahn 9 von Pflanzenbehältern 1 liegt auf eigenen zylindrischen Rollen 6 von 2 Metern Länge auf, wobei sichergestellt ist, dass jeder einzelne Pflanzenbehälter 1 stets mindestens auf vier oder fünf solcher Rollen 6 aufliegt. Die Bahnen 9 können sich auf diesen Rollen 6 in Richtung der Bahn 9 verschieben. Zum Antrieb dienen übliche Antriebssysteme für solche Rollen 6 wie sie in der Logistikbranche, etwa für Hochregallager, hinlänglich bekannt sind. Es sind dies zum Beispiel Gummibänder, Zahnriemen- oder Rollenketten-Antriebe, welche mindestens einen Teil der Rollen 6 antreiben, während andere Rollen nur als Support dienen und lose drehen können. Eine geeignete Dimensionierung der Pflanzenbehälter 1 mit einer Länge 2 m × Breite 1 m × Höhe 0.04 m führt zu einer Bahnbreite von 4 Metern, wobei sich eine einzelne solche Bahn 9 nach hinten um 150 Meter erstreckt und somit 150 m × 2 = 300 Pflanzenbehälter 1 einschliesst, und jeder Pflanzenbehälter bietet 2 m² Kultivationsfläche. Bei 25 parallel angeordneten Bahnen 9 sind das dann 7500 Pflanzenbehälter 1 auf einer Ebene, mit total 15'000 m² Kultivationsfläche. Über die Distanz von 150 m werden die Pflanzenbehälter 1 einer Bahn 9 während einer Kultivationsperiode ganz langsam auf den Rollen 6 verschoben. Wenn sie die 150 m zurückgelegt haben, sind die in ihrem Humus 5 eingepflanzten Setzlinge reif für die Ernte. Es ist klar, dass die Fördergeschwindigkeit der Bahnen 9 an die jeweils zu ziehenden Pflanzen anpassbar ist, je nachdem, wie schnell diese jeweiligen Pflanzen wachsen. Was in der vorliegenden Figur 2 nicht eingezeichnet ist, das sind die Stahlträger für die Aufnahme der von diesen Pflanzenbehältern 1 und der sie tragenden Stahlrollen 6 ausgehenden Lasten. Es ist klar, dass sich insgesamt beträchtliche Lasten ergeben. Ein einzelner Pflanzenbehälter 1 wiegt in der Grössenordnung ca. 400 kg. Dazu kommen vier bis fünf Stahlrollen über je 2×2 Meter Länge für jeden Laufmeter der Bahn 9, und schliesslich kommt die gesamte Stahlkonstruktion als Eigengewicht dazu, welche die Rollen 6 und Pflanzenbehälter 1 sowie die Laufstege 7 tragen muss, sowie noch weitere Installationen für die Bewässerung, Beleuchtung und Heizung, wie das noch weiter ausgeführt wird.

Die Figur 3 gibt weiteren Aufschluss über die Anordnung der Bahnen 9 und die Dimensionen des Kultivationsraums 10 einer solchen Anlage. Eine einzelne Ebene beinhaltet 25 Bahnen zu je zwei Einzelreihen von Pflanzenbehältern 1, also 7'500 Behälter und 15'000 m² Kultivationsfläche. Über einer Höhe von zum Beispiel 12.00 Metern bietet sich Platz für 10 Ebenen von Bahnen 9, das heisst die Bahnen 9 sind mit einem Abstand von je ca. einem Meter übereinander angeordnet, von Boden zu Boden der Pflanzenbehälter 1. Die Bahnen 9 erstrecken sich nach hinten über 150 Meter, das heisst dieser ganze Kultivationsraum 10 beinhaltet sodann 10 Ebenen × 7'500 Pflanzenbehälter × 2 m² Fläche, d.h. eine totale Kultivationsfläche von 150'000 m², was ca. 21 Fussballfeldern entspricht (FIFA/UEFA-Standard für ein Fussballfeld sind 105 Meter × 68 Meter = 7'140 m²). Das Gewicht der Pflanzenbehälter 1 - jeder ca. 400 kg schwer - akkumuliert sich so zu 30'000 Tonnen. Dazu kommt noch die Stahlkonstruktion zum Tragen und Verschieben dieser Pflanzenbehälter 1, mit wenigstens weiteren 3'000 bis 5'000 Tonnen pro Kultivationsebene 11. Wie im Bild gezeigt wird zwischen den einzelnen Bahnen 9 ein Abstand gebildet, sodass längs beider Seiten zwischen den Bahnen 9 je ein Laufsteg 7 von 80 cm Breite in Form eines Stahlgitters gebildet ist. Damit sind die einzelnen Pflanzenbehälter 1 über die ganze Länge der Bahnen 9 zugänglich. Die Ebenen 11 sind auf je einer Etage A, B, C angeordnet, und die Laufstege 7 befinden sich einzig auf der tiefsten Ebene einer einzelnen Etage A, B, C, während zwischen den beiden oberen Bahnen 9 jeder Etage A, B, C der Raum zwischen den Bahnen 9 frei bleibt, bis auf die Elemente der Stahlträger-Konstruktion, welche den ganzen Kultivationsraum wie eine Art Hochregallager trägt. Die unterste Etage A im gezeigten Beispiel beinhaltet im gezeigten Beispiel vier Ebenen von Bahnen 9 und ist daher etwas höher als die anderen beiden ausgelegt. Die Etagen B und C beinhalten je 3 Ebenen von Bahnen 9. Jede Bahn 9 und ihre Pflanzenbehälter 1 ruhen auf einer Vielzahl von zylindrischen und drehbar gelagerten Rollen 6 wie schon erwähnt, sodass sie auf denselben in Bahnrichtung rollen können.

Die Figur 4 zeigt diese Kultivationshalle 10 mit 10 Ebenen von je 25 Bahnen mit Pflanzenbehältern 1 in einer perspektivischen Darstellung mit Blick auf eine Ecke, und somit sowohl auf die Breitseite wie auch auf die Längsseite der Konstruktion. Die Breite dieser Konstruktion beträgt dann z.B. 121 m, die Höhe 11.2 m und die Länge 150 m. Ihr Gesamtgewicht mit Inhalt dürfte je nach Auslegung um die 50'000 bis 80'000 Tonnen betragen, was aber auf einer Grundfläche von 121 m × 150 m = 18'150 m² kein Problem darstellt. Sie bildet also insgesamt ein grosses, selbsttragendes Stahlgerippe mit vielen horizontal verlaufenden Stahlträgern auf jeder Ebene, welche an einer Vielzahl von vertikalen Stahlträgern als Stützen gehalten sind, die das ganze innere Volumen des Kultivationsraums 10 durchsetzen, wie das noch anhand einer weiteren Zeichnung dargestellt ist. In der Figur 4 sind diese Träger nicht eingezeichnet, sondern einzig die Pflanzenbehälter 1 mit ihren Bahnen 9, und die zwischen ihnen liegenden Laufstege 7 sind für die untersten drei Ebenen 11 eingezeichnet.

Die Figur 5 zeigt einen Aufriss der Kultivationshalle 10 von vorne gesehen, mit einem Ausschnitt von drei begehbaren Etagen A, B, C mit auf der untersten Etage A vier übereinander angeordneten Ebenen 11 von Bahnen 9 bzw. Pflanzenbehältern 1, und auf den Etagen B und C je drei Ebenen 11 von Bahnen 9 bzw. Pflanzenbehältern 1. Unter jedem Pflanzenbehälter 1 erkennt man eine zylindrische Rolle 6. Die Laufstege 7 zwischen den Bahnen 9 jeder Etage A, B, C sind begehbar und es sind Personen P eingezeichnet, woran man erkennt, dass diese Zugriff zu allen Pflanzenbehältern 1 links und rechts des Laufstegs 7 haben. Sie können sich auf diesen Laufstegen 7 über die ganze Länge der Bahn 9 bewegen, das heisst über ihre ganze Länge von 150 m gehen und links und rechts eingreifen, wenn irgendein Problem auftauchen sollte. Die hier stärker ausgezogenen Linien sind Stahlträger 12,13, welche die Struktur des Kultivierungsraumes 10 bilden und ihn tragen. Horizontal in Querrichtung und in Längsrichtung verlaufende Stahlträger 12 bilden das Gerüst für eine Etage A, B, C, auf welcher die Laufstege 7 zum Beispiel als Gitterroste verlegt sind. Die längs der Bahnen 9 seitlich am Ende der zylindrischen Rollen 6 horizontal angeordneten Längsträger dienen zur Lagerung der Rollen 6, während die vertikalen Stahlträger 13, die ebenfalls seitlich der Bahnen 9 angeordnet sind und ein stückweit in die Laufstege 7 hineinragen, die Struktur und ihr gesamtes Gewicht samt ihrem Eigengewicht tragen. Von den Ausmassen her gesehen nehmen die zylindrischen Stahlrollen 6 ca. 6 cm an Höhe ein, die Pflanzenbehälter 1 sind 40 cm hoch, und der Raum über ihnen beträgt dann 40 cm bis 50 cm bis zu den nächsthöher angeordneten Stahlrollen 6, sodass also pro Ebene ca. 90 cm bis 100 cm Höhe erreicht werden, und bei 10 Ebenen gibt das eine Gesamthöhe von rund 11-12 m. Unterhalb der Stahlrollen 6 ist eine Sprinkleranlage zwischen den längsverlaufenden Stahlträgern der oberen Stahlrollen 6 montiert, mit in vertikaler Richtung vorzugsweise motorisch höhenveränderlich ausfahrbaren Sprinklerdüsen, die über Schläuche mit Wasser versorgt werden. Unter jedem Pflanzenbehälter 1 ist ausserdem zwischen den Stahlrollen 6 ein Heizkörper in Form einer Heizschlange angeordnet, welche über Sensoren gesteuert die gewünschte und benötigte Temperatur für den oben liegenden Pflanzenbehälter 1 reguliert. Die Sprinklerdüsen für das Bewässern können beliebig nahe motorisch auf die Pflanzenbehälter herunter gefahren werden. Bei zum Beispiel vier Reihen von Salaten können zwei Reihen von Düsen jeweils zwischen die äusseren beiden Reihen der Salate abgesenkt werden und dort nahe am Humus diesen fein mit Wasser berieseln oder benebeln. Damit wird sichergestellt, dass alle Salate hinreichend mit Wasser versorgt werden. Ausserdem stellt diese Art der Wasserzufuhr sicher, dass die gezogenen Salate oder Feldfrüchte nie mit Humus bespritzt werden, wie dies auf dem offenem Feld regelmässig der Fall ist, wenn starker Regen auf den Boden auftrifft und die Salate von Regenspritzern vom Boden aus fein mit Erdreich bespritzt werden. Mit der beschriebenen Sprinkleranlage kann der Humus vielmehr ganz gezielt und fein über einen Wassernebel mit Feuchtigkeit versorgt werden. Die Wasserdüsen sind zu diesem Zweck mittels Sensoren gesteuert und benebeln den Humus gleichmässig und versorgen ihn mit der optimalen Menge Wasser. Die im Erdreich positionierten Fühler melden dem System die aktuelle Feuchtigkeit des Humus im entsprechenden Pflanzenbehälter 1. Mit der in einem abwechselnden Rhythmus über eine Wassernebel-Bestäubung erzielten Bewässerung wird eine Verschmutzung der Pflanzen wirksam vermieden und ihre Qualität wird dadurch gesteigert. Das zur Bewässerung benötigte Wasser wird über Schläuche zwischen den Heizschlangen hindurchgeführt, die unterhalb der Pflanzenbehälter zwischen den zylindrischen Rollen 6 angeordnet sind, und dadurch wird das Wasser automatisch erwärmt und weist so stets eine Abgabetemperatur zwischen 16 - 20 Grad Celsius auf. Zwischen den Sprinklerdüsen sind Lichtquellen installiert, mit geeigneten LEDs mit hoher Lichtausbeute, zur Abstrahlung von Licht mit einem Frequenzspektrum ähnlich jenem der natürlichen Sonne. Die LED's sind dimmbar und somit wird pro Pflanzbereich die gewünschte Lichtstärke für die Tag- und Nacht-Situation simuliert.

Die Figur 6 zeigt eine perspektivische Seitenansicht von zwei parallel nebeneinander liegenden Pflanzenbehältern 1 auf ihren zylindrischen Rollen 6, mit den tragenden, horizontal verlaufenden Stahlträgern 14 für die Rollen 6 und den vertikal verlaufenden Stahlträgern 13 zum Tragen der Struktur der ganzen Kultivationshalle 10. In einem solchen Pflanzenbehälter 1 finden vier Reihen von Salaten 15 Platz, und in der Länge enthält jede Reihe 8 Salate, sodass in einem einzelnen Pflanzbehälter 32 Salate herangezogen werden können. Dieser hier gezeigte Pflanzbehälter 1 rollt im gezeigten Beispiel auf einer Vielzahl von Rollen 6, während es ausreichend ist, dass mindestens zu jeder Zeit, das heisst in jeder Verschiebelage des Pflanzbehälters 1, mindestens vier oder besser fünf Rollen 6 den Pflanzbehälter 1 tragen. An den Pflanzenbehälter 1 im Vordergrund schliesst seitlich ein gleicher Pflanzbehälter 1 an, sodass eine Bahn 9 mit vier Metern Breite gebildet ist. Auf der anderen Seite der Bahn 9 sind ebenfalls horizontale 14 und vertikale Stahlträger 13 angeordnet. Die vertikal verlaufenden Stahlträger 13 tragen die gesamte Konstruktion, und die horizontal verlaufenden Stahlträger 14, von den vertikalen Stahlträgern 13 gestützt oder gehalten, tragen die zylindrischen Rollen 6, die an jedem Ende drehbar gelagert an diesen anschliessenden horizontalen Stahlträgern 14 gehalten sind. Die beiden Pflanzenbehälter 1 im Bild werden in der mit dem horizontal eingezeichneten Pfeil gezeigten Richtung durch die mittels Antrieben bewegbaren Rollen 6 pro Bewegungsphase um 1 m vorwärts bewegt, über insgesamt 150 m Distanz. Diese phasenweise Verschiebung erfolgt über die Zeit einer kompletten Kultivationsperiode. Am Anfang jeder Bahn starten die Pflanzenbehälter 1 mit jungen Sämlingen oder Setzlingen und am Ende kann die reife Frucht geerntet werden.

Die Figur 7 zeigt die Struktur einer alternativen, noch effizienter bewirtschaftbaren Kultivationshalle als Kernraum einer Anlage zum industriellen Ziehen von Salaten, Gemüsen und Feldfrüchten. Diese enthält 10 Ebenen mit je einer Vielzahl von Reihen von Pflanzenbehältern. Im Unterschied zur Version wie in Figur 3 gezeigt ist die hier gezeigte Kultivationshalle so konstruiert, dass sie keine Stockwerke aufweist, sondern einzig Rollenbahnen auf verschiedenen Niveaus, ohne jede baulichen Zwischenböden. Zwischen den einzelnen Reihen von übereinander angeordneten Pflanzenbehältern sind über die Länge durchgehend freie schluchtartige Freiräume 68 gebildet. Die Reihe von Pflanzenbehältern bzw. deren Rollenbahnen, auf denen sie aufliegen, sind von beidseitigen Stahlstützen 69 getragen, die vom Boden bis zur obersten Rollenbahn und zum Dach reichen. Diese Stahlstützen sind über die ganze Länge der Kultivationshalle alle paar Meter angeordnet, denn sie müssen ein erhebliches Gewicht tragen. Eine Rollenbahn für in der Breite zwei nebeneinanderliegende Pflanzenbehältern über 150 Meter, mit darauf also zwei durchgehenden Reihen von Pflanzenbehältern, dürfte um die 300 Tonnen Gewicht zusammenbringen, und bei 10 Niveaus von Reihen ergeben sich 3000 Tonnen. Wenn beidseits einer Doppelreihe alle zwei Meter eine Stahlstütze verbaut wird, so ergeben sich über 150 Meter ca. 150 Stützen und rein rechnerisch ergeben sich dann pro Stütze ca. 20 Tonnen Traglast.

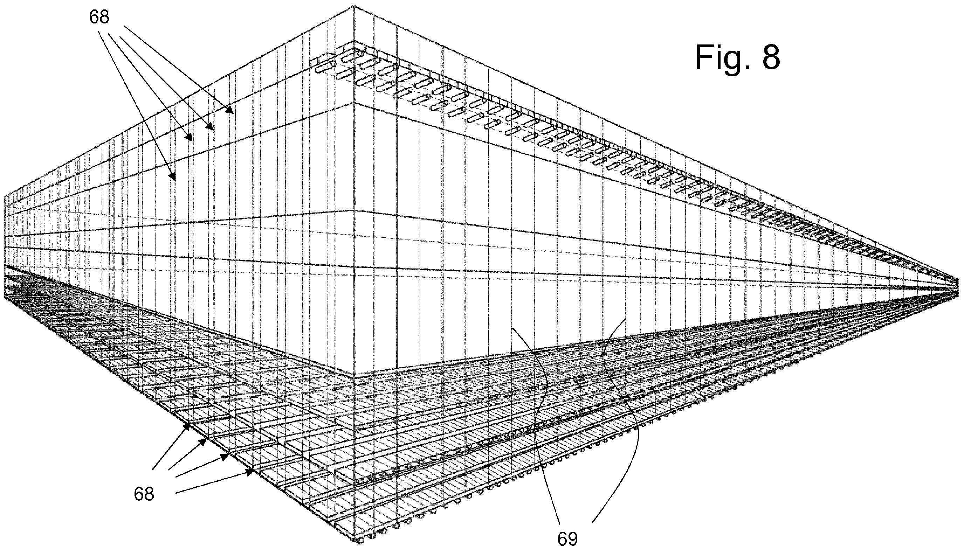

In Figur 8 ist diese Kultivationshalle nach Figur 7 in einer anderen Perspektive darstellt, sodass man in Froschperspektive auf die oberen Niveaus blickt und somit die Unterseite der hier obersten Doppelreihe von Pflanzenbehältern sehen kann, die hier angedeutet ist. In der Realität werden mehr Stahlrollen pro Pflanzenbehälter verbaut, wenigstens deren drei. Es sind hier auch eine Vielzahl von vertikalen Stahlstützen 69 angedeutet, jedoch nur längs der Aussenseiten der Kultivationshalle. Es ist klar, dass solche vertikale Stützen relativ dicht das ganz Innere der Kultivationshalle durchsetzen müssen, jedoch zwischen den beabstandeten Pflanzenbehälter-Reihen durchwegs ein jeweils schluchtartiger Freiraum 68 frei bleiben kann, der also von unten bis oben und über die ganze Länge der Kultivationshalle frei bleibt.

Die Figur 9 zeigt diese Kultivationshalle in einer Ansicht auf einen Ausschnitt der Front gesehen. Man sieht hier sechs Doppelreihen von Pflanzenbehältern auf hier insgesamt 15 Niveaus, wobei zwischen diesen Doppelreihen je ein schluchtartiger Freiraum gebildet 68 ist. Beidseits der Pflanzenbehälter-Doppelreihen sind vertikale Stahlstützen 69 eingezeichnet, welche die Rollenbahnen tragen, auf welchen die Pflanzenbehälter gelagert sind. In den schluchtartigen Freiräumen 68 verkehrt ein einzelner oder verkehren mehrere Schienenwagen 70, die in diesem Fall hintereinander auf den Schienen stehen. Auf jedem Schienenwagen 70 ist eine Hub-Scherenkonstruktion 71 aufgebaut, die eine begehbare Hebebühne 72 mit rundum verlaufenden Geländer 73 trägt. Damit sind die Hebebühnen 72, je nachdem über die Länge der Kultivationshalle auch mehrere Hebebühnen, sowohl in der Höhe wie auch über die Länge der Kultivationshalle verfahrbar. Mehrere Personen können daher die an den jeweiligen schluchtartigen Freiraum 68 angrenzenden Pflanzenbehälter betreuen und falls nötig Eingriffe, Reparaturen, den Austausch von Teilen etc. vornehmen. Dabei sind die einzelnen Hebebühnen elektromotorisch anheb- und absenkbar und von der Hebebühne aus steuerbar, wie auch die Fahrt der Schienenwagen 70, auf denen die Hebebühnen aufgebaut sind. Eine Steuerung sorgt dafür, dass ein Schienenwagen 70 nach Massgabe der aktuellen Höhe der von ihm getragenen Hebebühne 72 nur mit einer begrenzten maximalen Geschwindigkeit auf seinen Schienen verfahrbar ist. Je höher die Hebebühne 72 steht, umso langsamer ist die ermöglichte Maximalgeschwindigkeit, mit welcher der Schienenwagen 70 fahren kann, um der Stabilität Rechnung zu tragen.

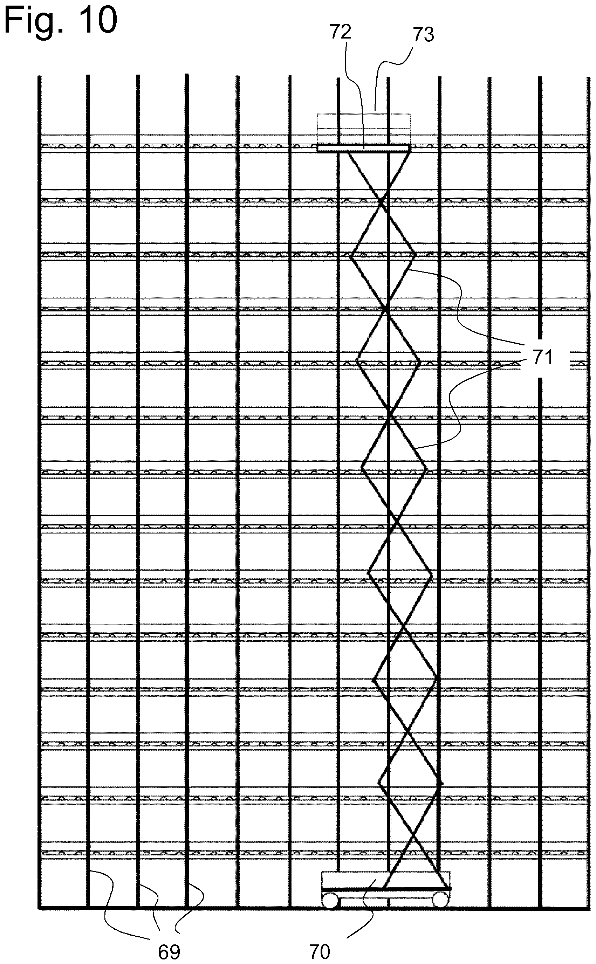

Die Figur 10 zeigt einen Ausschnitt der Struktur nach den Figuren 7, 8 und 9 in einer Ansicht auf die Seite gesehen, mit einer auf und ab fahrbaren Hebebühne 72 auf einem hin und her verschiebbaren Schienenwagen 70. Die Hub-Scherenkonstruktion 71 ist vorzugsweise doppelt ausgeführt, das heisst eine solche Hub-Scherenkonstruktion 71 erstreckt sich auf der linken und auf der rechten Seite des Schienenwagens 70 in die Höhe. Derartige Konstruktionen sind für Hochregallager im Markt verfügbar und brauchen nicht neu entwickelt zu werden. Sie müssen höchstens an spezifische Gegebenheiten angepasst werden. Die Hebebühne 72 ist rundum mit einem Geländer 73 ausgestattet, weil sonst eine Absturzgefahr für das Personal bestünde. Immerhin beträgt die Höhe der schluchtartigen Gänge oder Freiräume 68 ca. 10 Meter.

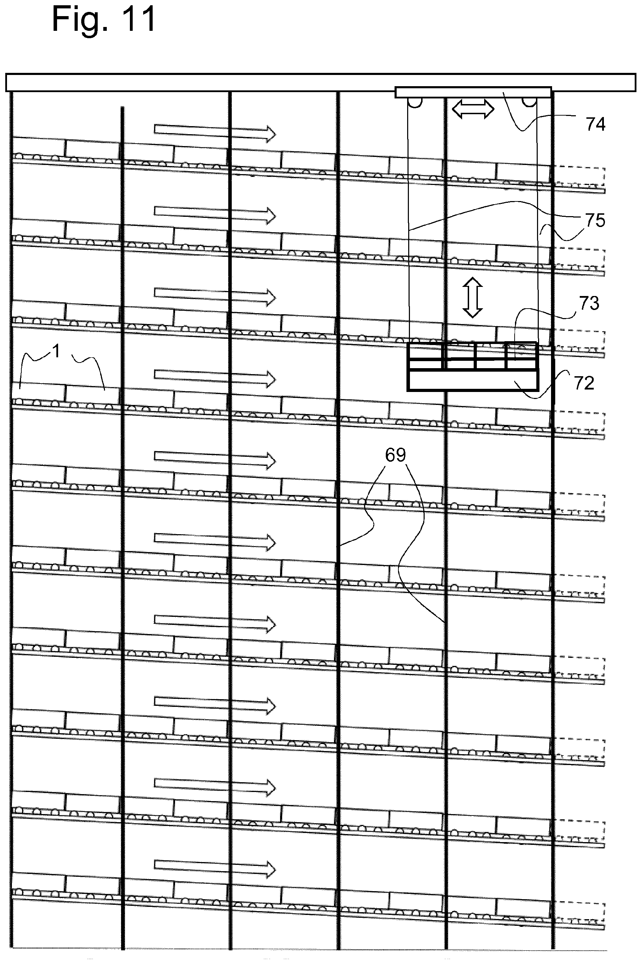

Eine besonders intelligente Anordnung der Rollenbahnen für die Pflanzenbehälter in der Kultivationshalle zeigt die Figur 11. Gezeigt ist ein Ausschnitt einer Struktur ähnlich wie nach den Figuren 7, 8 und 9 in einer Ansicht auf eine Seite der Rollenbahnen und Pflanzenbehälter gesehen. Die Rollenbahnen sind dabei als Besonderheit leicht geneigt angeordnet. Diese geneigte Anordnung der Rollenbahnen bringt den Vorteil, dass die Rollen nicht motorisch angetrieben werden müssen, sondern dass die Schwerkraft ausgenützt wird und die Pflanzenbehälter von selbst der Neigung nach im Bild von links nach rechts rollen. Sie müssen einfach am Anfang entsprechend höher platziert auf die Rollenbahn abgelegt werden als bei einer ebenen Rollenbahn. Der vorderste Pflanzenbehälter einer Reihe schlägt an einem Widerstand an, einem zum Beispiel temporär absenkbaren Balken am Ende der Rollenbahn. Beim Absenken kann der vorderste Pflanzenbehälter in den am Ende der Rollenbahn anschliessenden Ernteraum rollen und die ganze Reihe von Pflanzenbehältern hinter ihm kann um die seitliche Breite eines Pflanzenbehälters vorwärts rollen. Die Pflanzenbehälter müssen sich nicht zwingend gleichförmig bewegen, sondern können durchaus auch eine zeitlang stehenbleiben und dann jeweils um einen Pflanzenbehälter vorrücken. Ausserdem ist hier eine alternative Lösung für das Bewegen der Hebebühne 72 mit ihrem Geländer 73 für die Wartung, den Unterhalt und allfällige Reparaturen dargestellt. Anstelle einer Hebebühne, die mittels Hubscheren anhebbar ist, handelt es sich hier um eine hängende Hebebühne 72, die an Tragseilen 75 hängt, die über Rollen an einer Laufkatze 74 auf- und abrollbar sind, um die Höhenlage der Hebebühne zu verändern. Die Laufkatze 74 ist an einer Deckenschiene längs des schluchtartigen Freiraumes über die ganze Länge des Kultivationsraumes verfahrbar. Alle Hebebühnen-Bewegungen sind von der Hebebühne aus ferngesteuert steuerbar.

Die Figur 12 zeigt eine perspektivische Ansicht der gesamten Anlage von schräg oben gesehen, mit Blick ins Innere zum Aufzeigen einer möglichen Anordnung der verschiedenen Räume um die zentrale bisher beschriebene Kultivationshalle 10 herum. Die Kultivationshalle 10 bildet im Wesentlichen ein Stahlgerippe mit 10 Ebenen auf drei Etagen, und auf jeder Ebene sind die 25 Bahnen von Pflanzenbehältern 1 auf Rollen verschiebbar angeordnet, wie dieser Kultivationsraum 10 als Gesamtheit in den Figuren 3 und 4 dargestellt ist. Dieser komplette Kultivationsraum 10 ist in einer Gebäudehülle integriert und in Figur 12 mit 10 markiert. An allen Seiten des Kultivationsraums 10 schliessen weitere Räume an. Auf der vorderen Seite ist hier auf jeder Etage ein Raum 16 gebildet, in welchem die einzelnen Pflanzenbehälter 1, die dort mit frisch aufbereitetem Humus auf idealer Arbeitshöhe ankommen, von Personal oder auch von Robotern mit Sämlingen oder Setzlingen bestückt werden und hernach auf eine Bahn 9 wie beschrieben geschickt werden. Die eigens gezüchteten Jungpflanzen werden vorteilhaft mit einer speziellen Pflanzmaschine pro Etage, die für dieses Pflanzengut eingerichtet ist, bepflanzt und in das baulich getrennte, klimatisierte Gewächshaus über ein automatisches Transportsystem geführt, zum Beispiel mittels üblicher Rollensysteme. In der untersten Bepflanzungs-Ebene werden die mit Samen bestückten Pflanzenbehälter über die Länge von 150 Metern befördert und da werden dann die Jungpflanzen gezogen, um sie eine Ebene höher in frischen Humus zu setzen. Mittels eines Liftes 22 können die Pflanzenbehälter 1 entweder abgesenkt werden, sodass sie ebenerdig auf eine Bahn auf der untersten Ebene der betreffenden Etage geschoben werden können, oder aber hochgehievt auf die beiden höheren Ebenen dieser betreffenden Etage angehoben werden können und dann auf die Rollen zur entsprechenden Ebene geschoben werden können. Von diesem Säh- und Setzraum 16 bewegen sich die Pflanzenbehälter sodann ganz langsam in Phasen über die anschliessenden 150 Meter über die Länge des Kultivationsraums 10, bis sie am Ende der Pflanzfläche ankommen. Die jeweils hinterste Querreihe von Pflanzenbehälter wird bei der nächstfolgenden Bewegungsphase auf ein quer verlaufendes Rollentransportsystem geschoben. Auf diesem können die Pflanzenbehälter dann kollektiv zur Seite hin bewegt werden. Am vorderen Ende dieser sich in Querrichtung zur Kultivationshalle verschiebenden Reihen werden die Pflanzenbehälter vereinzelt und jeweils der vorderste wird durch ein schlitzartiges Fenster von wenig mehr als 2 m Breite und ca. 0.80 m Höhe aus der Kultivationshalle 10 in den Ernteraum geschoben. Dort gelangen sie auf ein wieder quer zur Kultivationshalle 10 verlaufendes Rollentransportsystem zu den einzelnen Erntestationen mit ihren Erntetischen, an denen die Salate oder andere Feldfrüchte manuell von je zwei Erntepersonen pro Pfanzenbehälter geerntet und in Erntekisten abgelegt werden. Als Ernte-Zubehör werden elektrisch oder pneumatisch betriebene automatische Wurzel-Abschneide-Vorrichtungen eingesetzt. Der anfallende Salat-, Gemüse- und Wurzel-Abfall wird über eine Förderanlage einer Sammelstelle zur Verfütterung an Tiere zugeführt. Damit werden diese Tiere täglich mit frischem Bio-Salat und -Gemüse versorgt, was eine konstante und hochwertige Fleischqualität erzeugt. Dieser Erntebereich 19 kann zum Beispiel eine Länge von 130 Metern, eine Breite von 15 Metern und eine Höhe von 3-4 Metern pro Etage messen. Selbstverständlich können alle diese beschriebenen Räumlichkeiten mit abweichenden Dimensionen gestaltet werden. Im Erntebereich 19 werden die Bio-Produkte in dieser baulich getrennten Halle geerntet und in Kisten gepackt, die dann zum Waschen und Säubern via den Lift 66 in die dafür eingerichtete anschliessende Halle 18 weiter befördert werden. Dort werden die Produkte maschinell gewaschen und getrocknet. Anschliessend werden sie in dem grosszügig konzipierten Kühlraum 23 zur weiten Verarbeitung zwischengelagert. In der Halle 24 werden sie je nach Frucht manuell oder maschinell gerüstet, portioniert, verpackt und kommissioniert, d.h. mit Etiketten nach Kundenwunsch versehen und gegebenenfalls nochmals im Kühllager zwischengelagert.

Die abgeernteten Pflanzenbehälter 1 werden von einem Sammel-Lift 20 von der entsprechende Etage in den Humusraum 21 befördert. In diesem Raum werden die Pflanzenbehälter 1 von Maschinen gewendet, der Humus somit ausgeleert und einer Wiederaufbereitungsanlage zugeführt Die entleerten Pflanzenbehälter gelangen in der Humushalle auf Stahlrollen nach vorne bis zur Halle 16. In dieser Wiederaufbereitungsanlage wird der Humus gelockert und mit neuem Humus oder Torf gemischt, um einen Lufteintrag zu erzielen. Noch verbliebenes Wurzelwerk, Steine, Ungeziefer etc. werden ausgesiebt und der gereinigte Humus wird mit natürlichem Dünger versetzt, speziell auf die im nächsten Durchgang zu züchtenden Pflanzen zugeschnitten. Dann werden die leeren Pflanzenbehälter 1 neu maschinell mit Humus befüllt und dieser wird in den Pflanzenbehältern ebenfalls maschinell glattgestrichen. Hernach gelangen die mit frischem gedüngten Humus angefüllten Pflanzenbehälter 1 erneut in den Säh- und Setzraum 16 und mittels eines Förderliftes 22 auch in die oberen Etagen bzw. Säh- und Setzräume 16. Dort werden die Pflanzenbehälter 1 von neuem mit Sämlingen oder Setzlingen bestückt. Es ist klar, dass die Grösse dieser aussen angelagerten Räume je nach Gegebenheiten verschieden gross gestaltet und auch unterteilt werden können.

Die Figur 13 zeigt einen Blick auf die Rückwand 62 der Kultivationshalle 10, in welcher ein eigenes, geschütztes Klima aufrechterhalten wird, welches in Bezug auf Temperatur und Luftfeuchtigkeit für den Pflanzenwuchs ideal ist. Gezeigt ist eine einzelne Etage der drei Etagen A, B, C. In jeder Etage gibt es drei bis vier Ebenen mit Reihen 8 und Bahnen von je zwei Reihen 8 von Pflanzenbehältern 1, von welche hier nur eine einzelne Reihe 8 mit ein paar Pfanzenbehälter 1 angedeutet ist. Wenn die Pflanzenbehälter 1 hinten an der Kultivationsstrecke ankommen, gelangen sie auf eine Reihe von Rollen 63, die in Querrichtung zu jenen der Kultivationshalle 10 verlaufen. Auf diesen werden wie im Bild gezeigt alle Pflanzenbehälter 1 nach links verschoben. Dort gibt es für jede Ebene von Pflanzenbehältern 1 eine Durchgangsöffnung 33 in der Rückwand der Kultivationshalle 10. Die Pflanzenbehälter 1 werden, einer nach dem anderen, von der ankommenden Querreihe aus auf einer wiederum in Längsrichtung zur Kultivationshalle 10 verlaufenden Reihe von Rollen 64 durch diese auf ihrer Höhe angeordnete Durchgangsöffnung 33 in den Ernteraum geschoben und dort vereinzelt.

In Figur 14 ist ein möglicher Grundriss einer Etage der gesamten Anlage zum Aufzeigen der Logistik für die einzelnen Pflanzenbehälter 1 dargestellt. Der hier gezeigte Grundriss soll nur die Grundgedanken für den Zweck und Einsatz dieser Aussenräume umreissen. Im Zentrum befindet sich der Kultivationsraum 10 und rund um ihn herum sind die Nebenräume der Anlage für seine Bewirtschaftung angegliedert, das heisst für das Aufbereiten der Pflanzenbehälter 1 und ihres Humus, für das Säen bzw. Setzen, für die Ernte der Pflanzen, für das Waschen, Trocken, Rüsten, Verpacken, Kommissionieren und allenfalls für eine gekühlte Zwischenlagerung in einem gekühlten Hochregallager. Im Zentrum steht der Kultivationsraum 10 wie er schon hinlänglich beschrieben wurde. Am Ende der Kultivationsstrecke, hier im Bild am rechten Ende des Kultivationsraumes 10, gelangen die Pflanzenbehälter 1 einer einzelnen Etage in einer kollektiven Reihe in Querrichtung zum seitlichen Rand des Kultivationsraumes 10 und von dort durch eine Durchgangsöffnung in den Ernteraum. Durch die Steuerung der Ankunft wird sichergestellt, dass die Pflanzenbehälter 1 sämtlicher Bahnen 9 einer einzigen Ebene A, B, C gleichzeitig um die Breite der Pflanzenbehälter 1 vorgeschoben werden und somit kollektiv eine Reihe auf dieser neuen, quer verlaufenden Förderanlage mit ihren Rollen 63 bilden. Die Pflanzenbehälter 1 werden dann im Gebäude an eine Seite hin bewegt, und am Ende auf eine Rollenbahn mit Rollen 64 geschoben, und schliesslich wieder in um 180° entgegengesetzter Richtung in den Ernteraum 19 bewegt. Im gezeigten Grundriss ist bloss eine einzelne solche Transportbahn 28 angeordnet. Es können indessen auch mehrere sein. Daneben stehen Tische 26, deren Flächen mit Rollen bestückt sind. Dort werden die Pflanzen von mindestens zwei Personen P, die vorzugsweise einander gegenüber sitzen oder stehen, geerntet und in Erntekisten abgelegt. Die abgeernteten Pflanzenbehälter 1 werden auf der Abtransport-Bahn 27 weiter befördert und gelangen schliesslich über eine Rollenbahn oder über einen Förderlift 20 in den Humusraum 21, wo die Pflanzenbehälter 1 geleert und mit neu aufbereitetem Humus befüllt werden. Die hierzu nötigen Humus-Aufbereitungsanlagen sind bekannt und können an die vorliegenden Gegebenheiten angepasst werden. Die vollen Erntekisten hingegen gelangen über Förderbänder und Rollenbahnen 27 und über einen Lift 66 in den Wasch- und Trockenraum 18. Dieser Wasch- und Rüst-Raum kann zum Beispiel eine Länge von 50 Metern, eine Breite von 50 Metern und eine Höhe von 10 Metern messen. Die geernteten Produkte werden hier gewaschen gesäubert, gerüstet und später in entsprechende Kisten gepackt. Für das Waschen sind bereits handelsübliche Maschinen verfügbar. Beim Ernten anfallende Abfälle wie Wurzeln, schadhafte Pflanzenteile etc. werden beim Ernten schon ausgesondert und in separaten Behältern gesammelt und als Tierfutter weiterverwendet. Das Waschen der geernteten Pflanzen, Salate und Gemüse, kann zum Beispiel in speziell auf dem Markt erhältlichen Kisten-Waschmaschinen für Salate und Gemüse geschehen. Für bestimmte sensible Produkte wie Nüsslisalat (Ackersalat) kann auch eine manuelle Wäsche angezeigt sein. Anschliessend gelangen die Salate oder Feldfrüchte in eine Zentrifuge zum Austrag von Wasser, oder sie werden per Luftstromanlage getrocknet. Schiesslich werden sie auf einem Förderband einer trockenen Zugluft aus Gebläsen ausgesetzt, für die gründliche Trocknung. Beim Waschen, Trocknen und Rüsten anfallende Abfälle werden abgeschieden und als Tierfutter weiterverwendet.

Der anschliessende Raum 23 beinhaltet ein grosses Hochregal-Kühllager für die geernteten Produkte. Daran schliesst ein Raum 24 für die Verpackung, Etikettierung und Kommissionierung zu fertig vorbereiteten, lieferbereiten Chargen an. Dieser Raum 24 für die Verpackung und Kommissionierung misst zum Beispiel eine Länge 50 m, eine Breite von 50 m und eine Höhe von 10 m. Nicht sofort auszuliefernde Chargen werden im Hochregal-Kühllager im Raum 23 zwischengelagert. Dieses beansprucht beispielsweise einen Raum von bis zu 100 m Länge, 50 m Breite und eine Höhe von bis zu 10 m. Die Bio-Produkte werden hier zur weiteren Verarbeitung zwischengelagert. Diese dann bereits portionierten und kommissionierten Produkte werden für den Kunden zum Abholen bereit kühl gelagert. Damit wird ein Puffer erzeugt, um Nachfrageschwankungen gerecht zu werden. Am Schluss folgt mit dem Raum 29 eine Lkw-gängige Auslieferhalle, in welcher gedeckt und wettergeschützt die Lkw mit fertig verpackten Produkten beladen und abgefertigt werden.

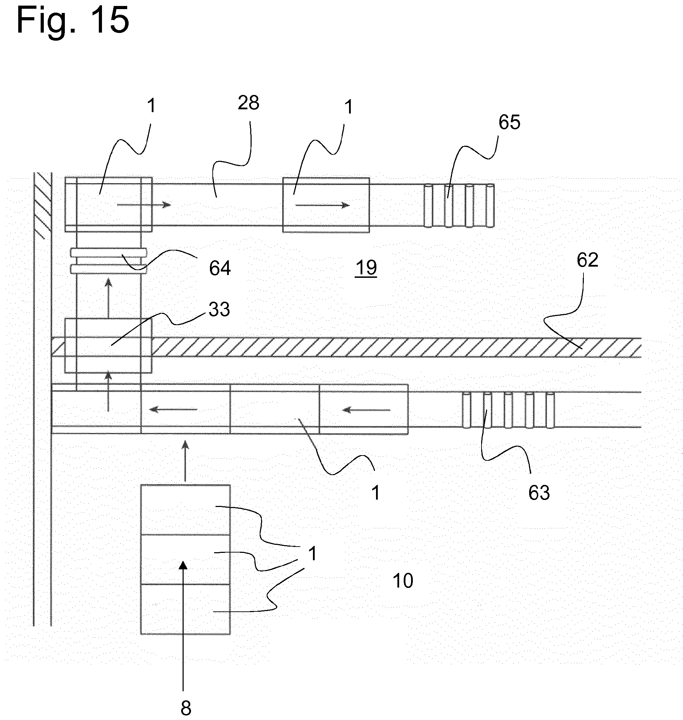

Die Figur 15 zeigt einen Grundriss der Ecke links hinten in der Kultivationshalle 10 wie in Figur 13 gezeigt, mit dem anschliessenden Ernteraum 19. Vor der Rückwand 62 der Kultivationshalle 10 werden die ankommenden Pflanzenbehälter 1 aller Reihen auf einer Querbahn mit Rollen 63 gesammelt und zu einer Reihe zusammengestellt. Die Pflanzenbehälter 1 werden darauf in Richtung ihrer Länge auf eine Seite befördert, wie mit den Pfeilen eingezeichnet. Dann werden sie, einer nach dem anderen der ankommenden Reihe, in einem Richtungswechsel um 90° nach rechts auf den Rollen 64 durch die Durchgangsöffnung 33 in der Rückwand der Kultivationshalle 10 geschoben und gelangen so in den Ernteraum 19. In diesem werden sie abermals in einem Richtungswechsel um 90° nach rechts auf eine Erntebahn geschickt, auf den Transportrollen 65.

Die Figur 16 zeigt einen Grundriss der Ernteetage 19 mit der Handling-Anlage für das Empfangen, Vereinzeln, Abernten und Weiterbefördern der Pflanzenbehälter 1. Die zur Ernte bereit und fertig gereiften Salate, Gemüse oder Früchte werden über ein am Ende jeder Kultivations-Ebene vorhandenes automatisches Transportsystem in die Erntehalle 19 befördert. Es werden immer drei bis vier Kultivations-Ebenen auf einer einzelnen Ernte-Etage im Raum 19 geerntet. Im Erdgeschoss-Bereich werden zusätzlich noch die Jungpflanzenkulturen geerntet. Diese werden jedoch nicht in die Erntehalle 19, sondern direkt über eine automatische Förderanlage in den Säh- und Setzraum 16 geführt. Die verschiedenen Jungpflanzen werden dann zum weiteren Transport auf die jeweilige Etage und zur entsprechenden Pflanzmaschine gebracht.

In der Erntehalle wie in Figur 16 dargestellt sind drei Erntestrassen 45 eingerichtet. Pro Erntestrasse 45 arbeiten jeweils zwei Personen zusammen an einem Ernteplatz, im Wesentlichen bestehend aus einer Arbeitsfläche oder einem Tisch, auf dem ein Pflanzenbehälter 1 auf ergonomisch idealer Höhe abgeerntet werden kann. Je nach Bedarf und Ernteanfall können mehrere Ernteplätze pro Erntestrasse 45 betrieben werden. Der Ablauf am Ernteplatz läuft wie folgt ab: Die Pflanzenbehälter 1 werden auf einem automatischen Fördersystem auf eine Erntehöhe von 90 cm zum Erntetisch befördert. Die Pflanzenbehälter 1 werden, bevor sie auf die Längsachse zum Erntetisch gelangen, mittels eines Liftes oder schiefwinklig angeordneten Förderbandes aufwärts oder abwärts auf die Erntehöhe von 90 cm gebracht. Auf dieser Höhe lässt sich die Ernte komfortabel verrichten und die Arbeit ermüdet weit weniger als wenn sich die Erntearbeiter auf einem Feld bücken müssen.

Die geernteten Feldfrüchte werden in eine PVC-Erntekiste zum weiteren Transport in den Waschraum befördert. Die zunächst leeren Erntekisten kommen über ein Fördersystem automatisch zu jedem Erntetisch. Sie werden unterhalb des Abtransport-Systems der beladenen Erntekisten zu dem jeweiligen Erntetisch befördert und über ein schiefwinklig angeordnetes Förderband auf die für das Beladen ideale Höhe gefördert und abgelegt. Die abgeernteten Pflanzenbehälter 1 werden mit dem Fördersystem zur Wiederaufbereitung in die Humushalle 21 und anschliessend zur Wiederbestückung mit Humus und Jungpflanzen in die dafür bestimmten Abläufe weitertransportiert, wie schon beschrieben. Die Ernte- oder Rüstabfälle werden über eine am Erntetisch vorhandene Mündung über ein Rohrsystem auf ein Transportförderband geworfen, das sich idealerweise unter dem Pflanzenbehälter-Fördersystem befindet, und zu einer Sammelstelle befördert. Von dort kann dieser nicht mehr benötigte Ernte- und Rüstabfall zu einem Tiermastbetrieb zur Aufbereitung eines Breis geliefert werden. Dieser kann zusammengesetzt sein aus Salat, Rüebli, Blumenkohl, Broccoli, Kohlraben, Wurzeln und etwas verbleibendem Humus. Jede Ernte-Etage ist mit einem grossen, geräumigen Waren- und Personallift erschlossen und verfügt über eigene, geschlechtergetrennte WC Anlagen 48. Ein Aufenthaltsraum 46 bietet dem Personal Ruhe und Platz für das komfortable Verbringen von Pausen, das Verzehren von Zwischenmahlzeiten, zum Kaffeetrinken oder auch für eine Rauchpause, wozu ein separater Raucherraum 47 mit Belüftung eingerichtet wird.

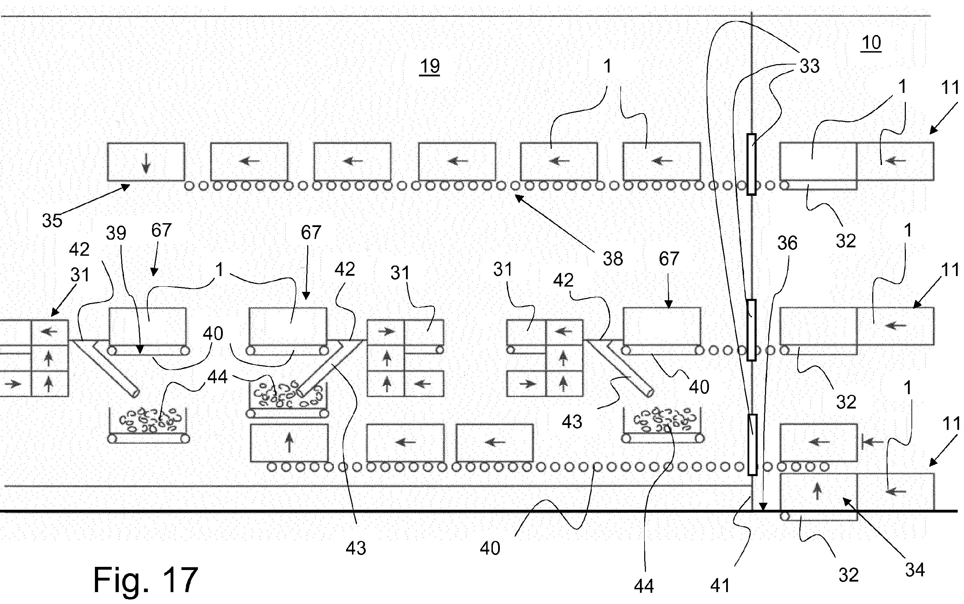

Die Figur 17 zeigt einen Aufriss einer Ernteetage im Ernteraum 19 mit der für den Empfang und das Abernten der auf drei Ebenen ankommenden, erntereifen Pflanzenbehälter 1 und Erntekisten 31. Man sieht rechts die drei Pflanz-Ebenen 11 im Kultivationsraum 10. Die zur Ernte gewachsenen Feldfrüchte werden über Transportsysteme zu dem im Nebenraum baulich getrennten Ernteplatz befördert. Man sieht anhand der eingezeichneten Pfeile, dass die verschiedenen Pflanzenbehälter-Ebenen pro Etage über Hebe- und Senk-Einrichtungen verfügen, mit welchen sie auf die Erntetage-Höhe abgesenkt oder angehoben werden können. Der automatische Transport der Pflanzenbehälter 1 sowie die Zulieferung aller benötigten Komponenten sind so durchdacht, dass ein speditiver und reibungsloser Ernteablauf sichergestellt ist, ohne Engpässe.

Die im Kultivationsraum 10 zur Ernte gereiften Feldfrüchte gelangen mit den Pflanzenbehältern 1 über die am Ende der Ebene angebrachte Förderanlage 32 zur Weiterverarbeitung. Die Förderanlage 32 bringt die bestückten Pflanzenbehälter 1 weiter durch die Verbindungsöffnungen 33 zwischen dem Gewächshaus 10 und der Ernte-Etage des Ernteraums 19 in denselben. Es werden pro Ernte-Etage 19 auf den drei Ebenen 11 der Kultivationsetage je sich über die Breite der jeweiligen Bahn der ankommenden Pflanzenbehälter 1 sich erstreckende schlitzförmige Öffnungen 33 in der Trennwand 41 zwischen Kultivationsraum 10 und Ernteraum 19 benötigt. Wenn gerade keine Pflanzenbehälter 1 von den Förderbändern 32 durch diese Trennwand 41 in den Ernteraum 19 geschoben werden, so können diese Öffnungen 32 durch Schiebeläden verschlossen werden. Das hilft, den Kultivationsraum in einem definierten Klima zu halten und Wärmeverluste zu vermeiden, und andererseits im Ernteraum 19 für das Personal ein angenehmes Raumklima aufrecht zu erhalten. Wegen der Höhendifferenz von der jeweiligen Kultivations-Ebene 11 zur Ernte-Etage 19 ist es unvermeidlich, dass man eine Einrichtung 34 für die Anhebung der Pflanzbehälter 1 benötigt, die auf der Geschossebene 36 ankommen, und eine Einrichtung 35 für die Absenkung der Pflanzenbehälter 1, die auf der obersten Ebene III einer Etage A, B, C aus dem Kultivationsraum 10 ankommen. Diese werden auf einem Rollenband 38 zu einer Absenkeinrichtung 35 gerollt, wonach sie dort auf das Niveau 39 für das Abernten abgesenkt werden. In dieser Weise werden alle Pflanzenbehälter 1 pro Ernteetage auf einem einheitlichen Niveau auf ein Rollen- oder Förderband 40 abgelegt. In der Figur 17 erkennt man drei Erntestationen 67 mit den auf dem zugehörigen Förderband 40 antransportierten Pflanzenbehältern 1, nachdem diese auf das entsprechende Niveau 39 angehoben oder abgesenkt wurden, oder aus der mittleren Kultivationsebene direkt horizontal antransportiert wurden. Die Pflanzen können am Ernteplatz bequem auf einer Arbeitshöhe von 90 cm, das heisst auf Tischhöhe, aus den Pflanzenbehältern 1 geerntet werden. Nach dem Ernten werden die Pflanzenbehälter 1 wie schon beschrieben in den Humusraum transportiert. Jede Erntestation 67 beinhaltet für jede Ernte-Person ein grosses Hartkunststoff Schneidbrett und ein grosses Rüstmesser. Die Ernte erfolgt manuell. Dadurch wird gewährleistet, dass eine saubere und fachgerechte Ernte der jeweiligen Produkte erfolgt. Die bei der Ernte anfallenden Abfälle werden in die im Ernte-Rüsttisch vorhandene Öffnung 42 bzw. Mündung entsorgt und sie fallen über Fallrohre 43 in einen Sammelbehälter 44, der über ein Förderband einer zentralen Sammelstelle zugeführt werden kann, oder die Abfälle fallen durch das Rohrsystem direkt zu dieser zentralen Sammelstelle, wo die Abfälle zu einem Tierfutter-Brei weiterverarbeitet werden. Die geernteten Produkte werden in die über das automatische Zustellsystem bereit gestellten Erntekisten 31 abgelegt. Die Anlieferung der Erntekisten 31 erfolgt über die untere Transportbahn des zum Abtransport der geernteten Produkte installierten Fördersystems. Dadurch kann sehr rationell, platz- und kraftsparend geerntet werden. Die Kisten 31 mit dem ErnteGut werden manuell über Rollen auf das Fördersystem geschoben, welches die geernteten Produkte zur Waschanlage im Wasch- und Trockenraum befördert und sie gelangen später ins Kühllager oder werden direkt ausgeliefert.

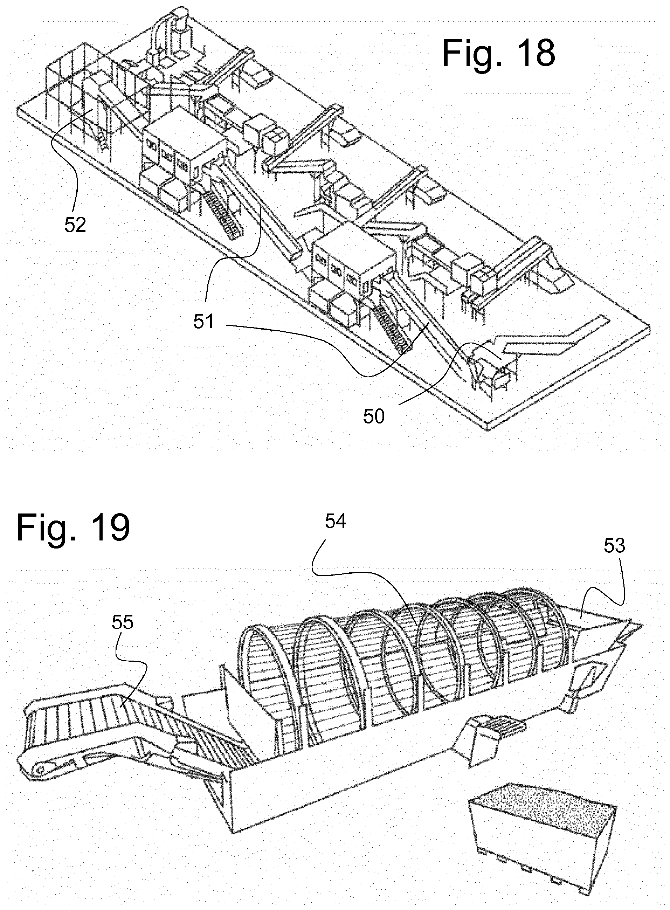

Figur 18 zeigt eine mögliche Anlage für das Aufbereiten des Humus, welcher aus den abgeernteten Pflanzbehältern stammt. Diese werden nach dem Abernten über die Liftanlage 20 (Fig. 12, 14) in den Humusraum 21 (Fig. 12, 14) befördert und dort in einen Bunker 50 geleert. Es werden laufend Proben entnommen, um die Konsistenz und die Zusammensetzung des Humus sowie seiner Nährstoffe zu ermitteln. Über Förderbänder 51 gelangt dann der Humus durch die Anlage, in welcher er gesiebt und mit biologischem Dünger 52 je nach Bedarf angereichert wird, sowie mit weiteren Zuschlagstoffen je nach Bedarf. Am Schluss werden die leeren Pflanzenbehälter erneut bis zu einem Niveau von ca. 30 cm mit Humus befüllt und glattgestrichen. Das alles kann maschinell erfolgen. Hernach werden die Pflanzenbehälter 1 mittels Förderbändern und über die Liftanlage 22 (Fig. 12) in die verschiedenen Bepflanzungsräume 16 befördert, wo sie mit Sämlingen oder Setzlingen bestückt werden. Diese Arbeit kann manuell erfolgen oder auch mittels geeigneter Roboteranlagen 49 (Fig. 14).

Die Figur 19 zeigt eine mögliche Waschanlage für Früchte, wie etwa Karotten oder Kartoffeln. Die Erntekisten werden in die Einschüttgosse 53 entleert und die Produkte landen in einer grossen Gittertrommel 54, in welcher sie gefangen sind und von allen Seiten mit Frischwasser besprüht werden können, während sich diese Gittertrommel 54 langsam dreht. Am Schluss werden sie von einem Förderband 55 aus der Waschanlage befördert und durchlaufen eine Trocknungsanlage mit Gebläsen. Das Beschicken und Heraustransportieren der Produkte erfolgt durchgehend, also nicht chargenweise, sodass keine Unterbrüche der Prozesse nötig werden.

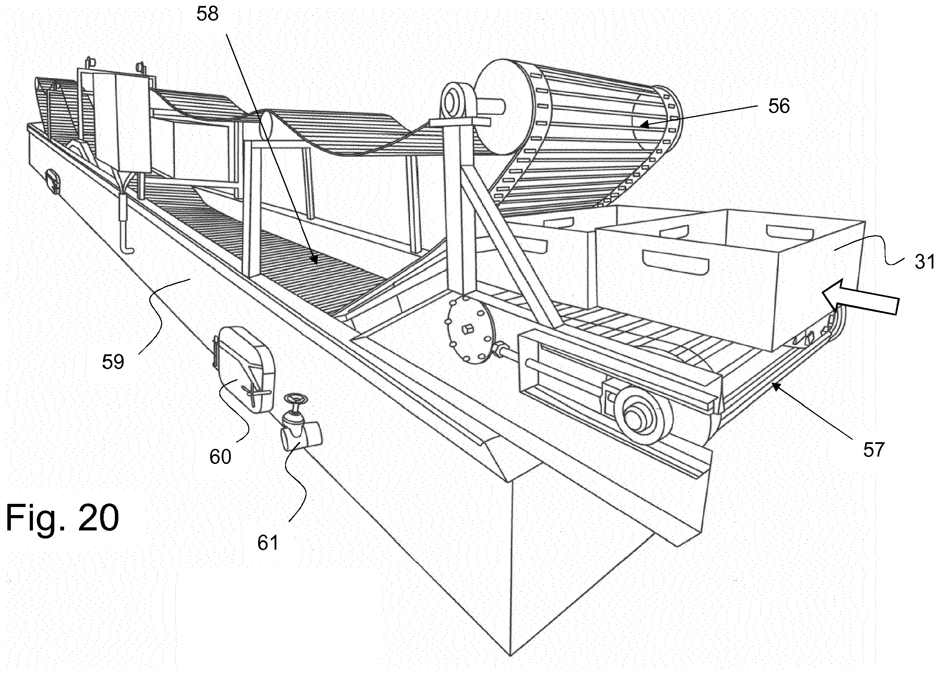

In Figur 20 ist eine im Markt erhältliche Waschanlage gezeigt, die speziell für das Waschen von Salaten geeignet ist. Die Erntekisten 31, gefüllt mit den Salaten, werden zwischen zwei Raupenbändern 56, 57 eingeschlossen schiefwinklig abwärts in ein Tauchbad 58 mit Frischwasser gefahren und durch dieses Tauchbad 58 gezogen. Am anderen Ende der Tauchstrasse werden sie wieder schiefwinklig aufwärts aus dem Wasser befördert und in eine Zentrifuge weiterbefördert, wo sie mitsamt den Erntekisten 31 zentrifugiert werden, wonach eine Lufttrocknung mittels Gebläsen anschliesst. Das Wasser im Tauchbad wird laufend regeneriert und die Schmutzstoffe werden ausgefiltert. An der hier dargestellten Wanne 59 der Anlage erkennt man eine Reinigungstüre 60 zum Ausspülen der Wanne von Zeit zu Zeit, sowie einen Einfüll- und Ablass-Stutzen 61 zum Befüllen mit frischem Wasser.

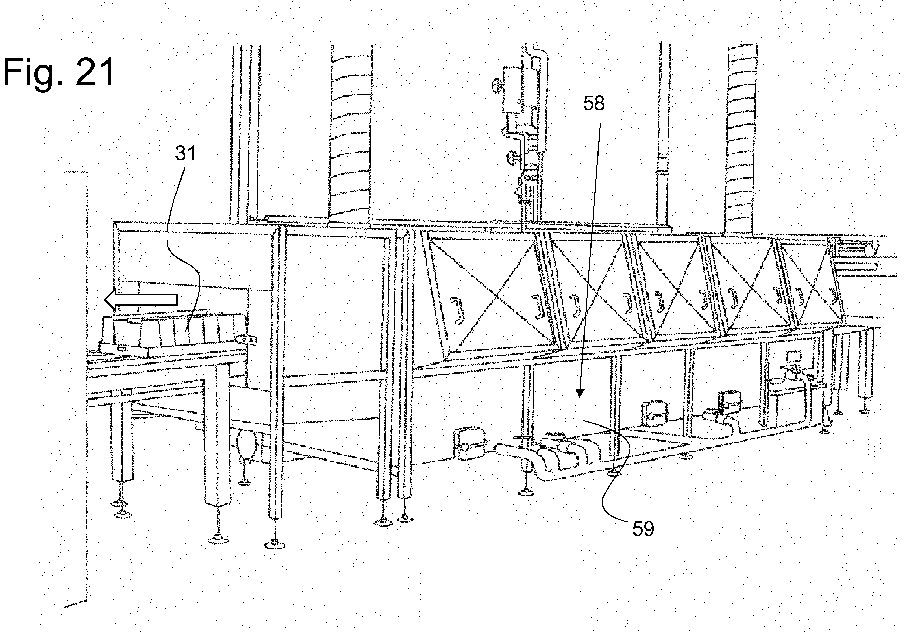

Die Figur 21 zeigt eine alternative marktübliche Waschanlage für Erntekisten 31. Diese werden im Innern der Anlage abgesenkt in eine Tauchbad 58 und in der Wanne dieses Tauchbades 59 durch die Anlage gefahren. Anschliessend werden sie angehoben, abgeduscht und hernach mittels Gebläsen getrocknet und kommen wie eingezeichnet mit sauberen Produkten aus der Anlage heraus.

Die in dieser Kultivationsanlage industriell und doch auf natürlichem Humus mit blosser Zugabe von Wasser gezogenen Produkte können für den Kunden spezifisch kommissioniert, zum Beispiel als Einzel- oder als Mischprodukte verarbeitet werden. Das modern eingerichtete Kühlhochregallager ermöglicht es sodann, die Kunden 365 Tage im Jahr stets mit hochwertigen Bio-Qualitäts-Produkten zu versorgen. Frische und Qualität kann über das ganze Jahr sichergestellt werden. Mit einer leistungsfähigen Sortier- und Verpackungsmaschine können für jeden Kunden vorbereitete Kommissionierungen zwischengelagert werden, und beim Eintreffen des Kunden können diese spezifisch vorbereiteten Kommissionen abgerufen und sofort kühl und frisch ausgeliefert werden. Viele Arbeiten und gar zunehmend mehr Arbeiten können dabei von Robotern besorgt werden. Folgende Salate und Gemüse eignen sich für die Züchtung in einer solchen Anlage, in einer nicht abschliessenden Aufzählung:
- Lollo (Rot & Grün)
- Eichblatt (Rot & Grün)
- Eisberg - Salat
- Nüssli - Salat
- Kopf - Salat
- Zucchetti klein
- Blumenkohl
- Broccoli
- Kohlraben
- Fenchel
- Rüebli

Zur ganzen Anlage gehören Infrastrukturräume 30 (Fig. 11) mit verschiedenen Einrichtungen für das Personal, etwa WC-Anlagen, Duschanlagen, ein Aufenthalts- und Fitnessraum, eine Kantine bzw. ein Restaurant mit zugehöriger Küche etc., Büros, Besprechungs- und Präsentationsräume. Dazu gehören auch die technischen Anlagen für die Stromerzeugung, Heizung und die zentrale Steuerung aller Förderanlagen, der Sprinkleranlagen, der Heizungen, der KunstBeleuchtung sowie aller Maschinen und Roboter. Diese Räumlichkeiten können zum Beispiel insgesamt eine Länge von 130 m, eine Breite von 10 Metern und eine Höhe von 10 Metern beanspruchen, aufgeteilt in bis zu drei Etagen. Diese Dimensionierung und Aufteilung kann selbstverständlich auch anders ausgelegt sein, je nach Personalbestand und lokalem Bedarf.

Das Dach der gesamten Anlage kann mit photovoltaischen Solarpanels bestückt werden, sodass der elektrische Storm für die diversen Förderanlagen, für die Lifte, für die Belichtung der Pflanzen, für die Sprinkleranlage, die Beheizung und den Betrieb aller Maschinen und Roboter im Mittel von der Anlage selbst erzeugt werden kann. Zudem eignet sich die Anlage zur Abnahme von Fernwärme aus einer Kehrichtverbrennungsanlage, weil sie permanent einen Wärmestrom benötigt. Ein Teil des Wassers für die Bewässerung der Pflanzen wird mit dem gewonnenen Dachwasser abgedeckt und bietet so einen optimalen Beitrag zum ökologischen Ausgleich.

### Ziffernverzeichnis

- 1: Pflanzenbehälter
- 2: Boden des Pflanzenbehälters
- 3: Breitseite des Pflanzenbehälters
- 4: Längsseite des Pflanzenbehälters
- 5: Humus
- 6: Zylindrische Rollen
- 7: Laufstege zwischen den Pflanzenbehälter-Bahnen
- 8: Einzelreihe von Pflanzenbehältern
- 9: Bahn aus zwei Reihen von Pflanzenbehältern
- 10: Gesamter Kultivationsraum
- 11: Ebenen einer Etage A, B, C
- 12: Horizontale Stahlträger quer zu den Bahnen 9 verlaufend
- 13: Vertikale Stahlträger
- 14: Horizontale Stahlträger beidseits längs der Bahnen 9 verlaufend
- 15: Salate im Pflanzbehälter
- 16: Räume zum Setzen von Sämlingen/Setzlingen
- 17: Auffangraum
- 18: Wasch- und Trockenraum
- 19: Ernteraum
- 20: Lift zum Humusraum
- 21: Humusraum
- 22: Lift zum Säh- und Setzraum 16
- 23: Kühl-Hochregallager
- 24: Pack- und Kommissionierungsraum
- 25: Rollenbahn für Ernte
- 26: Tische im Ernteraum
- 27: Abtransportbahn
- 28: Antransportbahn
- 29: Auslieferhalle
- 30: Infrastrukturraum
- 31: Erntekiste
- 32: Förderanlage am Ende der Kultivationsstrecke
- 33: Schlitzförmige Öffnungen in Trennwand 41
- 34: Hebeanlage für Pflanzenbehälter auf Etagenhöhe
- 35: Absenkanlage für Pflanzenbehälter auf oberster Ebene einer Etage
- 36: Niveau des Geschosses/Etage
- 37: Niveau der obersten Kultivationsebene der Etage
- 38: Rollenbahn für die Pflanzenbehälter der obersten Ebene
- 39: Ernteebene
- 40: Rollenbahn für die Pflanzenbehälter auf der Geschossebene
- 41: Trennwand zwischen Kultivationsraum 10 und Ernteraum 19
- 42: Mündungsöffnung für Ernteabfall
- 43: Fallrohr für Ernteabfall
- 44: Sammelbehälter für Ernteabfall
- 45: Erntestrasse
- 46: Aufenthaltsraum
- 47: Raucherraum
- 48: WC-Anlagen
- 49: Setzroboter
- 50: Bunker
- 51: Förderbänder der Humusrezyklier-Anlage
- 52: Dünger
- 53: Einfülltrichter für Erntegut
- 54: Gittertrommel
- 55: Förderband zum Ausgeben der gewaschenen Produkte
- 56: Förderkette für die Oberseite der Erntekisten
- 57: Förderkette für die Unterseite der Erntekisten
- 58: Frischwasserbad
- 59: Wanne für das Frischwasserbad
- 60: Reinigungstüre zum Ablassen des Wasserbades und Reinigen der Wanne
- 61: Einfüll- und Ablass-Stutzen für die Wanne
- 62: Rückwand der Kultivationshalle 10
- 63: Rollen für die Querverschiebung der Pflanzenbehälter in 10
- 64: Rollen für das Hinausschieben der Pflanzenbehälter in den Ernteraum 19
- 65: Rollen für den Transport im Ernteraum
- 66: Lift vom Ernteraum zum Waschraum
- 67: Erntestationen
- 68: Schluchtartige Freiräume
- 69: Stahlstützen für die Rollenbahnen
- 70: Schienenwagen mit Hebebühne
- 71: Hubscheren-Konstruktion auf dem Schienenwagen
- 72: Hebebühne
- 73: Geländer an der Hebebühne
- 74: Laufkatze längs der Decke, verfahrbar
- 75: Tragseile für hängende Hebebühne

## Patentansprüche

1. Verfahren zum industriellen Anbauen, Ziehen, Ernten, Waschen, Verpacken, Etikettieren und Kühllagern von Pflanzen, insbesondere von Salaten, Gemüsen oder Feldfrüchten, **dadurch gekennzeichnet, dass** innerhalb eines Gebäudes
a) Pflanzenbehälter (1) einheitlicher Grösse in einem abgetrennten Humusraum (21) mit aufbereitetem Humus maschinell befüllt werden,
b) die Pflanzenbehälter (1) in einen gesonderte Säh- und Setzraum (16) befördert werden, wo in den Humus dieser Pflanzenbehälter (1) Sämlinge oder Setzlinge von einem Roboter-Automaten (49) oder manuell gesetzt werden,
c) die Pflanzen hernach in diesen Pflanzenbehältern (1) in einem abgetrennten Kultivationsraum (10) gezüchtet werden, indem die Pflanzenbehälter (1) im Innern des Gebäudes auf mindestens einer Etage (A,B,C) in mehreren nebeneinanderliegenden Reihen (8) auf Fördermitteln (6) längs einer Bahn (9) über eine biologische Kultivationsperiode hinweg durch das Gebäude verschoben werden und dabei bedarfsweise mit Wasser benebelt und von künstlichem Licht beleuchtet und beheizt werden, wobei die Pflanzenbehälter (1) Tag und Nacht mit dem nötigen künstlichen Licht bestrahlt werden, indem zwischen den Sprinklerdüsen Lichtquellen installiert sind, mit geeigneten LEDs mit hoher Lichtausbeute, zur Abstrahlung von Licht mit einem Frequenzspektrum ähnlich jenem der natürlichen Sonne, und wobei diese LEDs dimmbar sind und somit pro Pflanzbereich die gewünschte Lichtstärke für die Tag- und Nacht-Situation simuliert wird, weiter gemäss mit dem von Sensoren im Humus laufend ermittelten Feuchtigkeitsbedarf mit dem Wasser aus Sprühdüsen benebelt werden und mittels der Wärme aus Heizkörpern ober- oder unterhalb der Pflanzenbehälter (1) im Kultivationsraum (10) eine vorgegebene Temperatur für das Pflanzenwachstum eingehalten wird, und
d) dass die Pflanzen in einem gesonderten Ernteraum (19) ausserhalb des Kultivationsraums (10) maschinell von einem Automaten oder manuell geerntet werden, dann in einer Waschanlage in einem gesonderten Wasch- und Trockenraum (18) gewaschen und hernach getrocknet werden und dann in einem gesonderten Verpackungs- und Kommisionierungsraum (24) maschinell von Automaten oder manuell verpackt und etikettiert werden, sowie bedarfsweise in einem zugehörigen Kühlraum (23) zwischengelagert oder direkt ausgeliefert werden.

2. Verfahren nach Anspruch 1, **dadurch gekennzeichnet, dass** innerhalb des Gebäudes und im Schritt
a) Pflanzenbehälter (1) einheitlicher Grösse in einem abgetrennten Humusraum (21) mit aufbereitetem Humus befüllt werden, indem zunächst der Humus gelockert und mit neuem Humus oder Torf gemischt wird, um einen Lufteintrag zu erzielen, noch verbliebenes Wurzelwerk, Steine, Ungeziefer etc. ausgesiebt werden und der gereinigte Humus mit natürlichem Dünger versetzt wird, speziell auf die im nächsten Durchgang zu züchtenden Pflanzen zugeschnitten, und die leeren Pflanzenbehälter (1) mit diesem aufbereiteten Humus neu maschinell befüllt werden und der Humus in den Pflanzenbehältern (1) maschinell glattgestrichen wird;
b) die Pflanzenbehälter (1) in einen gesonderte Säh- und Setzraum (16) befördert werden, wo in den Humus dieser Pflanzenbehälter (1) Sämlinge oder Setzlinge von einem Roboter-Automaten (49), das heisst die eigens gezüchteten Jungpflanzen mit einer Pflanzmaschine pro Etage oder manuell gesetzt werden, indem die einzelnen Pflanzenbehälter (1), die dort mit frisch aufbereitetem Humus auf idealer Arbeitshöhe ankommen, von Personal oder auch von Robotern mit Sämlingen oder Setzlingen bestückt werden und hernach auf eine Bahn im baulich getrennten, klimatisierte Gewächshaus über ein automatisches Transportsystem geführt werden;
c) die Pflanzen in diesen Pflanzenbehältern (1) gezüchtet werden, indem die Pflanzenbehälter (1) im Innern dieses wenigstens 10 Meter hohen Gebäudes auf drei Etagen (A,B,C) mit je drei Ebenen (11) und auf jeder Etage (A,B,C) in 25 Bahnen aus je einer Doppelreihe von Pflanzenbehältern (1) mit Laufstegen (7) zwischen den Bahnen (9) auf Fördermitteln in Form von zylindrischen Stahlrollen (6) längs je einer solchen Bahn (9) über eine biologische Kultivationsperiode hinweg durch das Gebäude verschoben werden und dabei bedarfsweise mit dem Wasser benebelt und von dem künstlichen Licht beleuchtet und beheizt werden, wobei einzelne solche Bahnen (9) aus nebeneinander liegend angeordneten Doppelreihen bestehen, wobei zwischen den Bahnen (9) je ein Abstand von ca. 0.80 m eingehalten ist, sodass bei 25 solcher Bahnen ein, mit je 0.80 m Zwischenraum zwischen den einzelnen Bahnen (9) in diesen Zwischenräumen ein Gitterrost als begehbarer Laufsteg (7) angeordnet ist.

3. Anlage zum Durchführen des Verfahrens nach einem der Ansprüche 1 bis 2, **dadurch gekennzeichnet, dass** sie ein Gebäude einschliesst mit einem gesonderten Kultivationsraum (10), in welchem auf mehreren Niveaus oder Etagen (A,B,C) je eine Vielzahl von Reihen von Pflanzenbehältern (1) auf Rollenbahnen gelagert sind, auf denen sie über eine Kultivationsperiode der Pflanzen hinweg über die Länge des Kultivationsraums (10) hin verschiebbar sind, wobei eine Sprinkleranlage unterhalb der Rollenbahnen installiert ist, die sich über die Länge des Kultivationsraums (10) erstreckt und über welche die einzelnen Pflanzenbehälter (1) der darunterliegenden Reihe nach Massgabe von Sensoren im Humus derselben benetzbar sind, sowie mit Heiz- und Beleuchtungsmitteln unterhalb der Rollenbahnen über die ganze Länge des Kultivationsraums (10) zur Beheizung und Beleuchtung der Pflanzen im darunterliegenden Pflanzenbehälter (1) mit pflanzenspezifischen, vorgegebenen Werten, sowie um den Kultivationsraum (10) herum, der zum Ziehen der Pflanzen dient, gesonderte Räumen (16,18,19,21,23,24) angegliedert sind, nämlich
• ein Säh- und Setzraum (16) für das Anbauen,
• ein Ernteraum (19) zum Ernten,
• ein Waschraum (18) mit zugeordneter Waschanlage, zum Waschen und Trocknen,
• ein Pack- und Kommissionierungsraum (24) zum je nach Frucht manuellen oder maschinellen rüsten, portionieren, verpacken und kommissionieren,
• ein Kühl-Hochregallager (23) zum gekühlten Lagern der verpackten Pflanzen, und
• ein Humusraum (21) zum maschinellen Wenden der Pflanzenbehälter (1) und Ausleeren des Humus und mit einer Wiederaufbereitungsanlage zum Lockern des Humus und Mischen mit neuem Humus oder Torf, um einen Lufteintrag zu erzielen, sowie zum Aussieben von verbliebenem Wurzelwerk, Steinen, Ungeziefer und Versetzen des so gereinigten Humus mit natürlichem Dünger, zugeschnitten auf die im nächsten Durchgang zu züchtenden Pflanzen und dann zum maschinellen neuen Befüllen der leeren Pflanzenbehälter (1) mit diesem aufbereiteten Humus und maschinellen Glattstreichen des Humus für eine neue Kultivationsperiode.

4. Anlage nach Anspruch 3, **dadurch gekennzeichnet, dass** die Rollenbahnen mit einer Neigung im Kultivationsraum verbaut sind, sodass die drauf abgestellten Pflanzenbehälter (1) antriebslos bzw. kraft der Schwerkraft auf den Rollen über die ganze Länge des Kultivationsraumes rollen und der jeweils vorderste Pflanzenbehälter (1) von einem absenkbaren Anschlag aufhaltbar ist, wobei die Reihe der Pflanzenbehälter (1) den vordersten Pflanzenbehälter (1) bei entferntem Anschlag durch Nachrollen in den Ernteraum (6) schiebt und hernach von diesem Anschlag wiederum stoppbar ist.

5. Anlage nach einem der Ansprüche 3 bis 4, **dadurch gekennzeichnet, dass** zwischen den Rollenbahnen schluchtenartige Freiräume (68) gebildet sind, in denen in der Höhenlage und Längsposition verschiebbare Hebebühnen (72) mit Schutzgeländer (73) angeordnet sind, zur Durchführung von Wartungs-, Unterhalts- und Reparaturarbeiten.

6. Anlage nach einem der Ansprüche 3 bis 5, **dadurch gekennzeichnet, dass** zwischen den Rollenbahnen schluchtenartige Freiräume (68) gebildet sind, in denen Hebebühnen (72) an Tragseilen (75) hängend angeordnet sind, und die Tragseile (75) an Rollen an einer Laufkatze (74) hängen, welche über die Länge der Freiräume (63) an einer Deckenschiene verfahrbar ist, sodass durch hin und her Verfahren und Auffahren und Absenken der Hebebühne (72) auf jeden Pflanzenbehälter (1) auf den beiden Seiten der Hebebühne (72) und seine zugeordnete Spinkleranlage und Beleuchtungsanlage zugreifbar ist.

7. Anlage nach einem der Ansprüche 3 bis 5, **dadurch gekennzeichnet, dass** zwischen den Rollenbahnen schluchtenartige Freiräume (68) gebildet sind, in in denen je wenigstens ein Schienenwagen (70) auf Schienen steht, wobei auf jedem dieser Schienenwagen (70) eine Hebe-Scherenkonstruktion (71) angeordnet ist, welche eine Hebebühne (72) mit Geländer (73) trägt, sodass von dieser Hebebühne (73) aus durch das darauf befindliche Personal durch Steuerung derselben ab der Hebebühne (72) durch hin und her Verfahren und Auffahren und Absenken der Hebebühne (72) auf jeden Pflanzenbehälter auf den beiden Seiten der Hebebühne und seine zugeordnete Spinkleranlage und Beleuchtungsanlage zugreifbar ist.

8. Anlage nach Anspruch 3, **dadurch gekennzeichnet, dass** sie ein mehrstöckiges Gebäude einschliesst mit einem gesonderten Kultivationsraum (10), der sich über mehrere Etagen (A,B,C) oder Niveaus erstreckt, und der für jede Ebene (11) der Etage (A,B,C) oder jedes Niveau mit Fördermitteln in Form von zylindrischen antreibbaren Rollen (6) auf mehreren Ebenen (11) pro Etage (A,B,C) ausgerüstet ist, auf welchen mehrere Reihen (8) von Pflanzenbehältern (1) in Bahnen (9) über eine Kultivationsperiode der Pflanzen hinweg über die Länge des Kultivationsraums (10) hin förderbar sind, sowie mit einer Sprinkleranlage für jede Bahn (9), die sich über die Länge des Kultivationsraums (10) erstreckt und über welche die einzelnen Pflanzenbehälter (1) jeder Bahn (9) nach Massgabe von Sensoren im Humus derselben benetzbar sind, sowie mit Heiz- und Beleuchtungsmitteln über die ganze Länge jeder Bahn (9) des Kultivationsraums (10) zur Beheizung und Beleuchtung der Pflanzen mit pflanzenspezifischen vorgegebenen Werten.

9. Anlage nach einem der Ansprüche 3 oder 8, **dadurch gekennzeichnet, dass** sie ein Gebäude mit einer Grundfläche von 200 m × 200 m mit drei Etagen (A,B,C) einschliesst, wobei auf jeder Etage (A,B,C) drei bis vier Ebenen (11) mit je 25 Reihen von Fördermitteln (6) in Form von teilweise antreibbaren zylindrischen Rollen (6) angeordnet sind, auf denen je eine Bahn (9) aus einer Doppelreihe von Pflanzenbehältern (1) durch das Gebäude hindurch verschiebbar ist, und über jeder Ebene (11) jeder Etage (A,B,C) eine genannte Sprinkleranlage mit höhenverstellbaren Sprinklerdüsen zur Bewässerung der Pflanzenbehälter (1) auf der jeweiligen Ebene der Etage (A,B,C) vorhanden ist, sowie eine Heizschlange für Warmwasser zum Beheizen der Pflanzbehälter und ihrer Zwischenräume.

10. Anlage nach einem der Ansprüche 3 bis 9, **dadurch gekennzeichnet, dass** im Ernteraum (19) die Pflanzenbehälter (1) pro Niveau oder pro Etage (A,B,C) Fördermittel vorhanden sind, mittels derer die Pflanzenbehälter (1) pro Niveau oder Etage (A,B,C) auf ein einziges Niveau (39) zur Ernte förderbar sind, und die Pflanzenbehälter (1) an Erntestationen (67) mit Erntetischen verschiebbar sind, an denen sie manuell oder mit zugehörigen Erntemaschinen automatisch aberntbar sind, dass eine Fördereinrichtung für die Zuführung von Erntekisten (31) an die Erntetische vorhanden ist, sowie für die Wegführung in den gesonderten Wasch- und Trockenraum (18) mit der Wasch- und einer Trockenanlage, sowie einen gesonderten Verpackungs- und Kommissionierungsraum (24) und einen gesonderten Kühlraum (23) für die Zwischenlagerung der verpackten Produkte.

11. Anlage nach einem der Ansprüche 3 bis 10, **dadurch gekennzeichnet, dass** der Raum zum Ernten hinter dem Ende der Rollenbahnen des Kultivationsraums (10) angeordnet ist, die Einrichtungen zum Setzen der Pflanzen vor dem Anfang der Rollenbahnen des Kultivationsraums (10), und seitlich des Kultivationsraums die angegliederten Räumen (16, 18, 19, 21, 23, 24) für das Waschen mittels einer zugeordneten Waschanlage, für das Trocknen, Verpacken und Kühllagern der Pflanzen sowie für das Rezyklieren des Humus aus den Pflanzenbehältern (1) und Befüllen derselben für eine neue Kultivationsperiode angeordnet sind.

## Claims

1. Process for the industrial cultivation, growing, harvesting, washing, packaging, labeling and cold storage of plants, in particular of salads, vegetables or field crops, **characterized in that** within a building
a) plant containers (1) of uniform size are mechanically filled with prepared humus in a separate humus room (21),
b) the plant containers (1) are conveyed to a separate sowing and planting room (16), where seedlings or seedlings are planted in the humus of these plant containers (1) by an automatic robot (49) or manually,
c) the plants are subsequently cultivated in these plant containers (1) in a separate cultivation room (10), by placing the plant containers (1) inside the building on at least one floor (A, B, C) in a plurality of adjacent rows (8) on conveyor means (6) along a path (9) through the building over a biological cultivation period, being misted with water as necessary and illuminated and heated by artificial light, the plant containers (1) being irradiated day and night with the necessary artificial light by installing light sources between sprinkler nozzles with suitable LEDs with high luminous efficiency, for emitting light with a frequency spectrum similar to that of the natural sun, and whereby these LEDs are dimmable and thus the desired light intensity for the day and night situation is simulated per planting area, further according to the moisture requirement continuously determined by sensors in the humus the plants are misted with the water from sprinkler nozzles and by means of the heat from heaters above or below the plant containers (1) in the cultivation space (10), a predetermined temperature for plant growth is maintained,
and
d) that the plants are harvested in a separate harvesting room (19) outside the cultivation room (10) mechanically by an automatic machine or manually, then washed in a washing plant in a separate washing and drying room (18) and thereafter dried, and then packed and labeled in a separate packing and picking room (24) mechanically by automatic machines or manually, and if necessary temporarily stored in an associated cooling room (23) or directly delivered.

2. Process according to claim 1, **characterized in that** within the building and in the step
a) plant containers (1) of uniform size in a separated humus space (21) are filled with prepared humus by first loosening the humus and mixing it with new humus or peat in order to achieve an influx of air, sifting out any remaining root system, stones, vermin, etc., and mixing the cleaned humus with natural fertilizer specially tailored to the plants to be grown in the next pass, and the empty plant containers (1) are newly filled by machine with this prepared humus and the humus in the plant containers (1) is smoothed by machine;
b) the plant containers (1) are conveyed to a separate sowing and planting room (16), where seedlings or saplings are planted in the humus of these plant containers (1) by an automatic robot (49), i.e. the specially cultivated young plants are planted with one planting machine per floor or manually, **in that** the individual plant containers (1), which arrive there with freshly prepared humus at an ideal working height, are loaded with seedlings or saplings by personnel or also by robots and are then guided onto a track in the structurally separate, air-conditioned greenhouse via an automatic transport system;
c) the plants are grown in these plant containers (1) by placing the plant containers (1) inside this building, which is at least 10 meters high, on three floors (A, B, C) with three levels (11) each and on each floor (A, B, C) in 25 lanes each consisting of a double row of plant containers (1) with walkways (7) between the lanes (9) on conveyor means in the form of cylindrical steel rollers (6) along one such lane (9) each are moved through the building over a biological cultivation period and in the process, if necessary, are sprayed with the water and illuminated and heated by the artificial light, individual such lanes (9) consisting of double rows arranged side by side, and between the lanes (9), each a distance of approx. 0.80 m is maintained, so that in the case of 25 such lanes, wich a space of 0.80 m between each of the individual lanes (9), a grating is arranged in these spaces as a walkway (7).

3. A plant for carrying out the process according to any one of claims 1 to 2, **characterized in that** it includes a building with a separate cultivation room (10), in which on several levels or floors (A, B, C) a plurality of rows of plant containers (1) each are stored on roller conveyors, on which they are displaceable along the length of the cultivation room (10) during a cultivation period of the plants, a sprinkler system is being installed below the roller conveyors, which extends over the length of the cultivation space (10) and over which the individual plant containers (1) of the underlying row can be wetted in accordance with sensors in the humus thereof, as well as with heating and lighting means below the roller conveyors over the entire length of the cultivation space (10) for heating and lighting the plants in the underlying plant container (1) with plant-specific, predetermined values, as well as separate spaces (16, 18, 19, 21, 23, 24) being attached around the cultivation space (10), which serves for growing the plants, namely
• a sowing and planting room (16) for cultivation,
• a harvesting room (19) for harvesting,
• a washing room (18) with associated washing equipment, for washing and drying,
• a packing and picking room (24) for manual or mechanical preparation, portioning, packing and picking, depending on the fruit,
• a refrigerated high-bay warehouse (23) for refrigerated storage of the packed plants, and
• a humus room (21) for mechanical turning of the plant containers (1) and emptying of the humus and with a reprocessing plant for slacking the humus with new humus or peat to achieve an air input, as well as for sifting out remaining roots, stones, and to add natural fertilizer to the thus cleaned humus, tailored to the plants to be cultivated in the next pass, and then to mechanically refill the empty plant containers (1) with this prepared humus and mechanically smooth the humus for a new cultivation period.

4. Plant according to claim 3, **characterized in that** the roller conveyors are installed with an inclination in the cultivation space so that the plant containers (1) placed thereon roll without drive or by gravity on the rollers over the entire length of the cultivation space and the frontmost plant container (1) can be stopped by a lowerable stop, whereby the row of plant containers (1) pushes the foremost plant container (1) into the harvesting space (6) by rolling after the stop has been removed and can then be stopped again by this stop.

5. Plant according to one of the claims 3 to 4, **characterized in that** between the roller conveyors gorge-like free spaces (68) are formed, in which lifting platforms (72) are arranged displaceable in the height position and longitudinal position with protective railings (73), for carrying out maintenance, servicing and repair work.

6. Plant according to one of the claims 3 to 5, **characterized in that** gorge-like free spaces (68) are formed between the roller conveyors, in which free spaces lifting platforms (72) are arranged suspended from supporting cables (75), and the supporting cables (75) are suspended from rollers on a trolley (74), which is movable over the length of the clearances (63) on a ceiling rail, so that each plant container (1) on the two sides of the lifting platform (72) and its associated spinkler system and lighting system can be accessed by moving the lifting platform (72) back and forth and raising and lowering it.

7. Plant according to one of the claims 3 to 5, **characterized in that** gorge-like free spaces (68) are formed between the roller conveyors, in each of which at least one rail carriage (70) stands on rails, a lifting-scissors structure (71) being arranged on each of these rail carriages (70), which structure carries a lifting platform (72) with railings (73), so that from this lifting platform (73) each plant container on both sides of the lifting platform and its associated spinkler system and lighting system can be accessed by the personnel located thereon by controlling the same from the lifting platform (72) by reciprocating and raising and lowering the lifting platform (72).

8. Plant according to claim 3, **characterized in that** it includes a multi-storey building with a separate cultivation room (10) extending over several floors (A, B, C) or levels, and which for each level (11) of the floor (A, B, C) or each level is equipped with conveying means in the form of cylindrical drivable rollers (6) on several levels (11) per floor (A, B, C), on which several rows (8) of plant containers (1) can be conveyed in paths (9) along the length of the cultivation space (10) over a cultivation period of the plants, as well as with a sprinkler system for each lane (9), which extends over the length of the cultivation space (10) and over which the individual plant containers (1) of each lane (9) can be wetted according to sensors in the humus thereof, as well as with heating and lighting means over the entire length of each lane (9) of the cultivation space (10) for heating and lighting the plants with plant-specific predetermined values.

9. Plant according to one of the claims 3 or 8, **characterized in that** it includes a building with a base area of 200 m × 200 m with three floors (A, B, C), whereby on each floor (A, B, C) three to four levels (11) are arranged, each with 25 rows of conveyor means (6) in the form of partially drivable cylindrical rollers (6), on each of which a track (9) consisting of a double row of plant containers (1) is displaceable through the building, and above each level (11) of each floor (A, B, C) there is a said sprinkler system with height-adjustable sprinkler nozzles for watering the plant containers (1) on the respective level of the floor (A, B, C), as well as a heating coil for hot water for heating the plant containers and their intermediate spaces.

10. Plant according to one of the claims 3 to 9, **characterized in that** in the harvesting space (19) the plant containers (1) per level or per floor (A, B, C) are provided with conveying means, by means of which the plant containers (1) per level or floor (A,B,C) can be conveyed to a single level (39) for harvesting, and the plant containers (1) can be displaced at harvesting stations (67) with harvesting tables, at which they can be harvested manually or automatically by means of associated harvesting machines, **in that** a conveying device is provided for feeding harvesting boxes (31) to the harvesting tables, as well as for guiding them to the separate washing and drying room (18) with the washing and a drying installation, as well as a separate packaging and commissioning room (24) and a separate cooling room (23) for the intermediate storage of the packaged products.

11. Plant according to one of the claims 3 to 10, **characterized in that** the space for harvesting is arranged behind the end of the roller conveyors of the cultivation space (10), the devices for setting the plants in front of the beginning of the roller conveyors of the cultivation space (10), and laterally of the cultivation space the associated spaces (16, 18, 19, 21, 23, 24) for washing by means of an associated washing plant, for drying, packing and cold storage of the plants, as well as for recycling the humus from the plant containers (1) and filling them for a new cultivation period.

## Revendications

1. Procédé pour la culture industrielle, la cultivation, la récolte, le lavage, l'emballage, l'étiquetage et le stockage au froid de plantes, en particulier de salades, de légumes ou de cultures de plein champ, **caractérisé en ce que**, à l'intérieur d'un bâtiment
a) des conteneurs de plantes (1) de taille uniforme sont remplis mécaniquement d'humus préparé dans une salle d'humus séparée (21),
b) les conteneurs de plantes (1) sont transportés vers une salle de semis et de plantation séparée (16), où des semis ou des jeunes plants sont plantés dans l'humus de ces conteneurs de plantes (1) par un robot automatique (49) ou manuellement,
c) les plantes sont ensuite cultivées dans ces conteneurs de plantes (1) dans une salle de culture séparée (10) en plaçant les conteneurs de plantes (1) à l'intérieur du bâtiment sur au moins un étage (A, B, C) en une pluralité de rangées adjacentes (8) sur des moyens de transport (6) le long d'un chemin (9) à travers le bâtiment pendant une période de culture biologique, en étant arrosées d'eau si nécessaire et éclairées et chauffées par une lumière artificielle, les conteneurs de plantes (1) étant irradiés jour et nuit avec la lumière artificielle nécessaire en installant des sources de lumière entre les buses d'arrosage avec des LED appropriées à haute efficacité lumineuse, pour émettre de la lumière avec un spectre de fréquence similaire à celui du soleil naturel, et dans lequel ces LED sont gradables et ainsi l'intensité lumineuse souhaitée pour la situation de jour et de nuit est simulée par zone de plantation, en outre, conformément au besoin d'humidité déterminé en continu par des capteurs dans l'humus, sont arrosées avec de l'eau provenant de buses d'arrosage et au moyen de la chaleur provenant d'appareils de chauffage au-dessus ou au-dessous des conteneurs de plantes (1) dans l'espace de culture (10), une température prédéterminée pour la croissance des plantes est maintenue,
et
d) que les plantes sont récoltées dans une salle de récolte séparée (19) à l'extérieur de la salle de culture (10), mécaniquement par une machine automatique ou manuellement, puis lavées dans une installation de lavage dans une salle de lavage et de séchage séparée (18) et ensuite séchées, puis emballées et étiquetées dans une salle d'emballage et de cueillette séparée (24), mécaniquement par des machines automatiques ou manuellement, et si nécessaire temporairement stockées dans une salle de refroidissement associée (23) ou directement livrées.

2. Procédé selon la revendication 1, **caractérisé en ce que** dans le bâtiment et dans l'étape
a) des conteneurs de plantes (1) de taille uniforme dans un espace d'humus séparé (21) sont remplis d'humus préparé en desserrant d'abord l'humus et en le mélangeant avec de l'humus neuf ou de la tourbe afin d'obtenir un afflux d'air, en éliminant les restes de racines, de pierres, de vermine, etc. et en ajoutant à l'humus nettoyé un engrais naturel spécialement adapté aux plantes à cultiver lors du passage suivant, et les conteneurs à plantes (1) vides sont à nouveau remplis mécaniquement avec cet humus préparé et l'humus dans les conteneurs à plantes (1) est lissé mécaniquement;
b) les conteneurs de plantes (1) sont transportés vers une salle de semis et de plantation séparée (16), où des semis ou des jeunes plants sont plantés dans l'humus de ces conteneurs de plantes (1) par un robot automatique (49), c'est-à-dire que les jeunes plants spécialement cultivés sont plantés avec une machine de plantation par étage ou manuellement, **en ce que** les conteneurs individuels de plantes (1), qui y arrivent avec de l'humus fraîchement préparé à une hauteur de travail idéale, sont chargés de semis ou de jeunes plants par du personnel ou également par des robots et sont ensuite guidés sur une voie dans la serre climatisée, structurellement séparée, au moyen d'un système de transport automatique;
c) les plantes sont cultivées dans ces conteneurs de plantes (1) en disposant les conteneurs de plantes (1) à l'intérieur de ce bâtiment, qui a une hauteur d'au moins 10 mètres, sur trois étages (A, B, C) avec trois niveaux (11) chacun et sur chaque étage (A, B, C) en 25 couloirs constitués chacun d'une double rangée de conteneurs de plantes (1) avec des passerelles (7) entre les couloirs (9) sur des moyens de transport sous la forme de rouleaux cylindriques en acier (6) le long d'un tel couloir (9), chacun est déplacé à travers le bâtiment pendant une période de culture biologique et dans le processus, si nécessaire, est arrosé avec de l'eau et éclairé et chauffé par la lumière artificielle, dans lequel les couloirs individuels (9) sont constitués de doubles rangées disposées de manière adjacente les unes aux autres, dans lequel entre les couloirs (9), une distance d'environ 1,5 m est 0,80 m est maintenu entre les voies (9), de sorte que, dans le cas de 25 voies de ce type, un caillebotis est disposé dans ces espaces intermédiaires sous la forme d'un couloir praticable (7) avec un espace intermédiaire de 0,80 m entre chacune des voies individuelles (9).

3. Installation pour la mise en oeuvre du procédé selon l'une des revendications 1 à 2, **caractérisée en ce qu'**elle comprend un bâtiment avec une salle de culture séparée (10), dans laquelle une pluralité de rangées de conteneurs de plantes (1) sont stockées sur chacun de plusieurs niveaux ou étages (A, B, C) sur des convoyeurs à rouleaux, sur lesquels elles peuvent être déplacées sur la longueur de la salle de culture (10) pendant une période de culture des plantes, un système d'arrosage étant installé sous les convoyeurs à rouleaux, qui s'étend sur toute la longueur de l'espace de culture (10) et sur lequel les différents récipients de plantes (1) de la rangée sous-jacente peuvent être mouillés en fonction de capteurs dans leur humus, ainsi que des moyens de chauffage et d'éclairage sous les transporteurs à rouleaux sur toute la longueur de l'espace de culture (10) pour chauffer et éclairer les plantes dans le récipient de plantes sousjacent (1) avec des valeurs prédéterminées spécifiques aux plantes, ainsi que des espaces séparés (16, 18, 19, 21, 23, 24) étant fixés autour de l'espace de culture (10), qui servent à tirer les plantes, à savoir
• une salle de semis et de plantation (16) pour la culture,
• une salle de récolte (19) pour la récolte,
• une salle de lavage (18) avec des équipements de lavage associés, pour le lavage et le séchage,
• une salle d'emballage et de cueillette (24) pour la préparation manuelle ou mécanique, le portionnement, l'emballage et la cueillette, en fonction du fruit,
• un entrepôt réfrigéré à hauts rayonnages (23) pour le stockage réfrigéré des plantes emballées, et
• une chambre à humus (21) pour retourner mécaniquement les conteneurs de plantes (1) et vider l'humus et avec une installation de retraitement pour ameublir l'humus et le mélanger avec de l'humus neuf ou de la tourbe pour obtenir un apport d'air, ainsi que pour tamiser les restes de système racinaire, les pierres, et ensuite pour remplir mécaniquement les conteneurs de plantes vides (1) avec cet humus préparé et pour lisser mécaniquement l'humus pour une nouvelle période de culture.

4. Installation selon la revendication 3, **caractérisée en ce que** les convoyeurs à rouleaux sont installés avec une inclinaison dans l'espace de culture de sorte que les conteneurs de plantes (1) placés dessus roulent sur les rouleaux sur toute la longueur de l'espace de culture sans entraînement ou par la force de gravité et le conteneur de plantes avant (1) peut être arrêté par une butée abaissable. l'espace de culture sur toute sa longueur et le conteneur de plantes le plus en avant (1) peuvent chacun être arrêtés par une butée abaissable, la rangée de conteneurs de plantes (1) poussant le conteneur de plantes le plus en avant (1) dans l'espace de récolte (6) en roulant après que la butée ait été retirée et pouvant ensuite être à nouveau arrêtée par cette butée.

5. Installation selon l'une des revendications 3 à 4, **caractérisée en ce que** des espaces libres (68) en forme de gorges sont formés entre les transporteurs à rouleaux, espaces libres dans lesquels sont disposées des plates-formes de levage (72) avec des garde-corps de protection (73), qui peuvent être déplacées en position verticale et longitudinale, pour effectuer des travaux de maintenance, d'entretien et de réparation.

6. Installation selon l'une des revendications 3 à 5, **caractérisée en ce que** des espaces libres (68) en forme de gorge sont formés entre les convoyeurs à rouleaux, espaces libres dans lesquels sont disposées des plates-formes de levage (72) suspendues à des câbles porteurs (75), et les câbles porteurs (75) sont suspendus à des rouleaux sur un chariot (74), qui est déplaçable sur la longueur des espaces libres (63) sur un rail de plafond, de sorte que par un mouvement de va-et-vient et par le soulèvement et l'abaissement de la plate-forme de levage (72), chaque conteneur de plantes (1) des deux côtés de la plate-forme de levage (72) et son système de rotation et d'éclairage associé peuvent être accessibles.

7. Installation selon l'une quelconque des revendications 3 à 5, **caractérisée en ce que** des espaces libres (68) en forme de gorges sont formés entre les convoyeurs à rouleaux, dans chacun desquels au moins un chariot (70) repose sur des rails, une structure de ciseaux de levage (71) étant disposée sur chacun de ces chariots (70), laquelle supporte une plate-forme de levage (72) avec des garde-corps (73), de sorte que, à partir de cette plate-forme de levage (73), chaque conteneur de plantes des deux côtés de la plate-forme de levage et son système d'épandage et son système d'éclairage associés peuvent être accessibles au personnel situé sur ces derniers en les commandant à partir de la plate-forme de levage (72) par un mouvement de va-et-vient et par le soulèvement et l'abaissement de la plate-forme de levage (72).

8. Installation selon la revendication 3, **caractérisée en ce qu'**elle comprend un bâtiment à plusieurs étages avec une salle de culture séparée (10) s'étendant sur plusieurs étages (A, B, C) ou niveaux et qui est équipée pour chaque niveau (11) de l'étage (A, B, C), C) ou chaque niveau est équipé de moyens de transport sous la forme de rouleaux cylindriques (6) pouvant être entraînés sur plusieurs niveaux (11) par étage (A, B, C), sur lesquels plusieurs rangées (8) de conteneurs de plantes (1) peuvent être transportées dans des chemins (9) sur la longueur de l'espace de culture (10) pendant une période de culture des plantes. ainsi qu'un système d'arrosage pour chaque allée (9), qui s'étend sur la longueur de l'espace de culture (10) et par lequel les récipients individuels de plantes (1) de chaque allée (9) peuvent être mouillés en fonction de capteurs dans leur humus, ainsi que des moyens de chauffage et d'éclairage sur toute la longueur de chaque allée (9) de l'espace de culture (10) pour chauffer et éclairer les plantes avec des valeurs prédéterminées spécifiques aux plantes.

9. Installation selon l'une des revendications 3 ou 8, **caractérisée en ce qu'**elle comprend un bâtiment d'une surface de base de 200 m × 200 m avec trois étages (A, B, C), sur chaque étage (A, B, C) étant disposés trois à quatre niveaux (11) comportant chacun 25 rangées de moyens de transport (6) sous forme de rouleaux cylindriques partiellement entraînables (6), sur chacun desquels un rail (9) d'une double rangée de conteneurs de plantes (1) est déplaçable à travers le bâtiment, et au-dessus de chaque niveau (11) de chaque étage (A, B, C) se trouve un système d'arrosage avec des buses d'arrosage réglables en hauteur pour arroser les conteneurs de plantes (1) au niveau respectif de l'étage (A, B, C), ainsi qu'un serpentin de chauffage pour l'eau chaude pour chauffer les conteneurs de plantes et leurs espaces intermédiaires.

10. Installation selon l'une des revendications 3 à 9, **caractérisée en ce que** dans la zone de récolte (19), les conteneurs de plantes (1) par niveau ou par étage (A, B, C) sont pourvus de moyens de transport au moyen desquels les conteneurs de plantes (1) par niveau ou étage (A, B, C) peuvent être transportés à un seul niveau (39) pour la récolte, et les conteneurs de plantes (1) peuvent être déplacés à des stations de récolte (67) avec des tables de récolte, où ils peuvent être récoltés manuellement ou automatiquement avec des machines de récolte associées, **en ce qu'**un dispositif de transport est prévu pour amener les caisses de récolte (31) aux tables de récolte, ainsi que pour les guider vers la salle de lavage et de séchage séparée (18) avec l'installation de lavage et de séchage, ainsi qu'une salle d'emballage et de mise en service séparée (24) et une salle de réfrigération séparée (23) pour le stockage intermédiaire des produits emballés.

11. Installation selon l'une quelconque des revendications 3 à 10, **caractérisée en ce que** l'espace pour la récolte est situé derrière l'extrémité des convoyeurs à rouleaux de l'espace de culture (10), les installations pour la mise en place des plantes sont situées devant le début des convoyeurs à rouleaux de l'espace de culture (10), et sur le côté de l'espace de culture les espaces annexes (16, 18, 19, 21, 23, 24) pour le lavage au moyen d'une installation de lavage associée, pour le séchage, l'emballage et le stockage au froid des plantes et pour le recyclage de l'humus des conteneurs de plantes (1) et leur remplissage pour une nouvelle période de culture.
